# EUROPÄISCHE PATENTSCHRIFT

(11) **EP 2 719 125 B1**
(45) Veröffentlichungstag und Bekanntmachung des Hinweises auf die Patenterteilung: **23.03.2016**
(21) Anmeldenummer: 12726104.8
(22) Anmeldetag: 06.06.2012
(51) Int. Cl.: H04L 12/28

(54) **VORRICHTUNG UND VERFAHREN ZUR SKRIPTGESTEUERTEN DATENVERARBEITUNG VON DATEN FÜR EIN HAUSKOMMUNIKATIONS- ODER HAUSAUTOMATIONSSYSTEM**
DEVICE AND METHOD FOR THE SCRIPT-CONTROLLED DATA PROCESSING OF DATA FOR A HOME COMMUNICATION SYSTEM OR HOME AUTOMATION SYSTEM
DISPOSITIF ET PROCÉDÉ DE TRAITEMENT COMMANDÉ PAR SCRIPT DE DONNÉES POUR UN SYSTÈME DE COMMUNICATION DOMESTIQUE OU SYSTÈME DOMOTIQUE

(30) Priorität: 06.06.2011 DE 102011077012
(43) Veröffentlichungstag der Anmeldung: 16.04.2014
(73) Patentinhaber: S. Siedle & Söhne Telefon- und Telegrafenwerke OHG, 78120 Furtwangen (DE)
(72) Erfinder: JÄKEL, Frank, 67069 Ludwigshafen (DE)
(74) Vertreter: Isarpatent
(86) Internationale Anmeldenummer: PCT/EP2012/060635
(87) Internationale Veröffentlichungsnummer: WO 2012/168263

(56) Entgegenhaltungen:
- US-A1- 2003 106 062
- US-A1- 2006 063 517
- US-A1- 2010 277 300
- KYSELYTSYA Y ET AL: "Implementation of the KNX Standard", 20061001, 1. Oktober 2006 (2006-10-01), Seiten 1/11-11/11, XP007919038,

## Beschreibung

### GEBIET DER ERFINDUNG

Die Erfindung betrifft eine Vorrichtung und ein Verfahren zur skriptgesteuerten Datenverarbeitung von Daten für ein Hauskommunikations- oder Hausautomationssystem.

### TECHNISCHER HINTERGRUND

Herkömmliche Hausautomations- bzw. Hauskommunikationssysteme weisen eine enge Produkt- oder Herstellerbindung auf. Dabei lassen sich in vielen Fällen nur Komponenten eines bestimmten Herstellers einsetzen. Daher sind Geräte häufig nicht miteinander kompatibel. Folglich sind herkömmliche Hausautomations- bzw. Hauskommunikationssysteme unflexibel und schwer an technische Rahmenbedingungen oder Kundenwünsche adaptierbar.

Die Druckschrift US 2003 / 0 106 062 A1 offenbart ein Heimnetzwerk, welches von einem Zustandsautomaten gesteuert wird.

Die Druckschrift US 2010 / 0 277 300 A1 offenbart eine Steuereinrichtung zum Steuern eines Heimnetzwerks.

Die Druckschrift "Implementation of the KNX Standard" von Dr. Y. Kyselytsya und Dr. Th. Weinzierl beschreibt den KNX-Standard für Heimautomatisierung.

Die Druckschrift US 2006 / 0 063 517 A1 offenbart ein System zur Identifikation von Besuchern und zur Kommunikation mit Besuchern.

### ZUSAMMENFASSUNG DER ERFINDUNG

Es ist daher eine Aufgabe der vorliegenden Erfindung, ein Verfahren und eine Vorrichtung zur Datenverarbeitung von Daten für ein Hauskommunikations- oder Hausautomationssystem zu schaffen, welches die obengenannten Nachteile vermeidet.

Diese Aufgabe wird erfindungsgemäß durch eine Vorrichtung mit den in Patentanspruch 1 angegebenen Merkmalen gelöst.

Die Erfindung schafft eine Vorrichtung zur skriptgesteuerten Datenverarbeitung von Daten für ein Hauskommunikations- oder Hausautomationssystem mit

mindestens einer Schnittstelle zum Empfang von Datenpaketen, welche von einem ersten Gerät über ein Datennetzwerk gemäß einem ersten Datenübertragungsprotokoll übertragen werden, wobei jede Schnittstelle einen zugehörigen Protokolltreiber aufweist, welcher die in den empfangenen Datenpaketen enthaltenen Daten in ein internes Datenformat umwandelt, und mit

einer Skripting-Engine, die ein gespeichertes Anwendungsprogrammskript lädt, welches die in dem internen Datenformat vorliegenden empfangenen Daten gemäß den in dem Anwendungsprogrammskript enthaltenen Anwendungsprogrammanweisungen anhand von Statuspunkten (SP), die jeweils einen Zustand einer Gerätefunktion eines Gerätes angeben, verarbeitet, wobei die verarbeiteten Daten durch einen Protokolltreiber in Datenpakete verpackt und gemäß einem zweiten Datenübertragungsprotokoll über eine Schnittstelle zu einem zweiten Gerät übertragen werden.

Die erfindungsgemäße Vorrichtung bietet den Vorteil, dass sie zu einem einheitlichen Netzwerkstandard kompatibel ist. Die erfindungsgemäße Vorrichtung kann eine strukturierte Verkabelung sowie die Datenübertragungsprotokolle, welche von der Telefonie bis zur Mediensteuerung die gemeinsame Basis zahlreicher Anwendungen bilden, nutzen und sich auf diese Weise nahtlos in ein IP-Netzwerk integrieren.

Die erfindungsgemäße Vorrichtung weist vorzugsweise mehrere Schnittstellen auf, wobei diese Schnittstellen mindestens eine Feldbus-Schnittstelle, eine SIP-(Session Initiation Protocol)Schnittstelle, eine Webservice-Schnittstelle, eine Telefonanlagen-Schnittstelle.

Die erfindungsgemäße Vorrichtung kann durch einen zentralen oder durch mehrere dezentrale Server eines Serververbundes gebildet werden. Der oder die Server setzen sich dabei aus einer Reihe von Diensten und Schnittstellen zusammen, welche die verschiedenen Funktionen und Anforderungen des Systems unter sich aufteilen. Die Vorrichtung ist vor allem für das Verbindungshandling, die Erweiterung sowie die Kontrolle des jeweiligen Systems zuständig.

Bei einer möglichen Ausführungsform der erfindungsgemäßen Vorrichtung sind die Geräte jeweils über ein Datennetzwerk, beispielsweise ein Local Area Network (LAN), mit der Vorrichtung zur skriptgesteuerten Datenverarbeitung direkt verbunden, wobei es sich bei den Geräten beispielsweise um Endgeräte handelt.

Weiterhin kann bei einer möglichen Ausführungsform ein Gateway zu einem anderen Datennetzwerk mit der erfindungsgemäßen Vorrichtung zur skriptgesteuerten Datenverarbeitung von Daten verbunden sein. Bei diesem Gateway kann es sich beispielsweise um ein KNX-Gateway handeln.

Bei einer möglichen Ausführungsform der erfindungsgemäßen Vorrichtung wird das Anwendungsprogrammskript durch die Skripting-Engine aus einem Skript-Programmspeicher geladen und die in dem geladenen Anwendungsprogrammskript enthaltenen Anwendungsprogrammanweisungen werden durch einen Interpreter interpretiert.
Bei einer möglichen Ausführungsform führt der Interpreter einen Quellcode des Anwendungsprogrammskripts direkt aus.

Bei einer alternativen Ausführungsform der erfindungsgemäßen Vorrichtung wird der Quellcode des Anwendungsprogrammskripts in einen Zwischencode übersetzt und anschließend wird dieser Zwischencode ausgeführt.

Weiterhin kann bei einer möglichen weiteren Ausführungsform der Interpreter einen vorkompilierten Code des Anwendungsprogrammskripts ausführen.

Bei einer bevorzugten Ausführungsform der erfindungsgemäßen Vorrichtung weist der Server einen Server-Kernel auf, welcher als primäre Basisdienste,
einen Nachrichtenaustauschdienst zum internen Austausch von Nachrichten, einen Datenbankdienst zum Bereitstellen von Konfigurationsdaten und
einen Datastore-Dienst zum Bereitstellen von Laufzeitdaten aller Dienste des Servers aufweist.

Bei einer möglichen Ausführungsform der erfindungsgemäßen Vorrichtung stellt der Server als sekundäre Dienste Netzwerkdienste bereit, welche einen DHCP-(Dynamic Host Configuration Protocol)Dienst zur Vergabe von IP-Adressen für die Geräte, einen DNS-(Domain Name System)Dienst zur Adressauflösung, einen NTP-Dienst zur Zeitsynchronisation und
einen TFTP-(Trivial File Transfer Protocol)Dienst zum Datentransfer zwischen Teilnehmern und dem Server aufweist.

Bei einer möglichen Ausführungsform der erfindungsgemäßen Vorrichtung bzw. des erfindungsgemäßen Servers weist dieser eine Feldbus-Schnittstelle auf, bei der es sich vorzugsweise um eine KNX-Feldbus-Schnittstelle handelt.

Bei einer möglichen Ausführungsform der erfindungsgemäßen Vorrichtung stellt der Datastore-Dienst des Servers als Laufzeitdaten Statuspunke bereit, die jeweils einen Zustand einer Gerätefunktion eines Gerätes angeben. Bei diesen Gerätefunktionen kann es sich um Sensorfunktionen und Aktorfunktionen der jeweiligen Geräte handeln.

Bei einer möglichen Ausführungsform der erfindungsgemäßen Vorrichtung ist jedem Statuspunkt ein konfigurierbarer Datentyp fest zugeordnet, welcher durch den Datenbankdienst des Server-Kernels bereitgestellt wird.

Bei einer möglichen Ausführungsform der erfindungsgemäßen Vorrichtung bildet eine Wertänderung eines Statuspunktes ein Auslöseereignis, durch welches die Skripting-Engine dazu aktiviert wird, anhand der durch den Datenbankdienst des Server-Kernels bereitgestellten Konfigurationsdaten ein zu dem jeweiligen Statuspunkt zugehöriges Anwendungsprogrammskript aus dem Skript-Programmspeicher zu laden und auszuführen.

Bei einer möglichen Ausführungsform der erfindungsgemäßen Vorrichtung wird durch das geladene Anwendungsprogrammskript in Abhängigkeit von dem durch die Wertänderung eines Statuspunktes hervorgerufenen Auslöseereignis der Wert mindestens eines anderen Statuspunktes einer Gerätefunktion eines Gerätes als Folgeereignis geändert.

Bei einer möglichen Ausführungsform der erfindungsgemäßen Vorrichtung wird bei Auftreten eines Folgeereignisses durch das geladene Anwendungsprogrammskript mindestens eine zugehörige Gerätefunktion eines Gerätes angesteuert, indem verarbeitete Daten als Steuerdaten in einem Datenpaket verpackt zu dem jeweiligen Gerät übertragen werden.

Bei einer möglichen Ausführungsform der erfindungsgemäßen Vorrichtung wird eine durch ein Anwendungsprogrammskript hervorgerufene Wertänderung eines Statuspunktes infolge eines Auslöseereignisses oder infolge eines Folgeereignisses anhand der durch den Datenbank-Dienst bereitgestellten Konfigurationsdaten an andere Anwendungsprogrammskripte in einer Nachricht gemeldet, die eine derartige Meldung entsprechend den Konfigurationsdaten abonniert haben.

Bei einer möglichen Ausführungsform der erfindungsgemäßen Vorrichtung ist die Vorrichtung über eine Schnittstelle mit einem Anzeigegerät verbunden, welches einem Nutzer die Wertänderung eines Statuspunktes anzeigt.

Die Erfindung schafft ferner ein Verfahren zum skriptgesteuerten Verarbeiten von Daten für ein Hauskommunikations- oder Hausautomationssystem durch einen Server mit den in Patentanspruch 18 angegebenen Merkmalen.

Die Erfindung schafft demnach ein Verfahren zum skriptgesteuerten Verarbeiten von Daten für ein Hauskommunikations- oder Hausautomationssystem durch einen Server mit den Schritten: Umwandeln von Daten, die der Server in einem Datenpaket gemäß einem ersten Datenübertragungsprotokoll von einem ersten Gerät empfängt, durch einen zugehörigen Protokolltreiber des Servers in ein internes Datenformat,
Verarbeiten der in dem internen Datenformat des Servers vorliegenden Daten gemäß Anweisungen eines geladenen Anwendungsprogrammskripts des Servers anhand von Statuspunkten (SP), die jeweils einen Zustand einer Gerätefunktion eines Gerätes angeben, und
Verpacken der verarbeiteten Daten durch einen Protokolltreiber des Servers in Datenpakete, die gemäß einem zweiten Datenübertragungsprotokoll von dem Server zu einem zweiten Gerät übertragen werden.

### INHALTSANGABE DER ZEICHNUNGEN

Im Weiteren werden mögliche Ausführungsformen der erfindungsgemäßen Vorrichtung und des erfindungsgemäßen Verfahrens zur skriptgesteuerten Datenverarbeitung von Daten für ein Hauskommunikations- oder Hausautomationssystem unter Bezugnahme auf die beigefügten Figuren näher erläutert.
- Fig. 1: zeigt ein Diagramm zur Darstellung einer Ausführungsvariante eines Systems, welches eine erfindungsgemäße Vorrichtung zur skriptgesteuerten Datenverarbeitung von Daten für ein Hauskommunikations- und Hausautomationssystem einsetzt;
- Fig. 2: zeigt ein Diagramm zur prinzipiellen Darstellung einer weiteren Ausführungsvariante eines Hauskommunikations- oder Hausautomationssystems, welches die erfindungsgemäße Vorrichtung zur skriptgesteuerten Datenverarbeitung von Daten einsetzt;
- Fig. 3: zeigt ein Diagramm zur Darstellung einer weiteren Ausführungsvariante eines Hauskommunikations- oder Hausautomationssystems, welches die erfindungsgemäße Vorrichtung zur skriptgesteuerten Datenverarbeitung von Daten einsetzt;
- Fig. 4: zeigt schematisch den Aufbau einer erfindungsgemäßen Vorrichtung zur skriptgesteuerten Datenverarbeitung von Daten für ein Hauskommunikations- oder Hausautomationssystem;
- Fig. 5: zeigt ein einfaches Ablaufdiagramm zur Darstellung einer Ausführungsvariante eines erfindungsgemäßen Verfahrens zur skriptgesteuerten Datenverarbeitung von Daten für ein Hauskommunikations- oder Hausautomationssystem;
- Fig. 6: zeigt ein Ausführungsbeispiel einer erfindungsgemäßen Vorrichtung zur skriptgesteuerten Datenverarbeitung von Daten für ein Hauskommunikations- oder Hausautomationssystem;
- Fig. 7: zeigt ein Anwendungsbeispiel für ein Hauskommunikations- oder Hausautomationssystem, welches die erfindungsgemäße Vorrichtung zur skriptgesteuerten Datenverarbeitung von Daten einsetzt;
- Fig. 8: zeigt ein weiteres Anwendungsbeispiel eines Hauskommunikations- oder Hausautomationssystems, welches die erfindungsgemäße Vorrichtung zur skriptgesteuerten Datenverarbeitung von Daten einsetzt;
- Fig. 9: zeigt ein weiteres Anwendungsbeispiel für ein Hauskommunikations- oder Hausautomationssystem, welches die erfindungsgemäße Vorrichtung zur skriptgesteuerten Datenverarbeitung von Daten einsetzt;
- Fig. 10: zeigt ein weiteres Anwendungsbeispiel für ein Hauskommunikations- oder Hausautomationssystem, welches die erfindungsgemäße Vorrichtung zur skriptgesteuerten Datenverarbeitung von Daten einsetzt;
- Fig. 11: zeigt ein weiteres Anwendungsbeispiel für ein Hauskommunikations- oder Hausautomationssystem, welches die erfindungsgemäße Vorrichtung zur skriptgesteuerten Datenverarbeitung von Daten einsetzt;
- Fig. 12: zeigt ein weiteres Anwendungsbeispiel für ein Hauskommunikations- oder Hausautomationssystem, welches die erfindungsgemäße Vorrichtung zur skriptgesteuerten Datenverarbeitung von Daten einsetzt;
- Fig. 13: zeigt schematisch ein Hauskommunikations- oder Hausautomationssystem auf Protokollebene, welches die erfindungsgemäße Vorrichtung zur skriptgesteuerten Datenverarbeitung von Daten einsetzt;
- Fig. 14: zeigt schematisch ein beispielhaftes Sequenzdiagramm, wie es bei dem erfindungsgemäßen Verfahren und der erfindungsgemäßen Vorrichtung zur skriptgesteuerten Datenverarbeitung von Daten verwendet werden kann;
- Fig. 15: zeigt ein weiteres beispielhaftes Sequenzdiagramm, wie es bei dem erfindungsgemäßen Verfahren und der erfindungsgemäßen Vorrichtung zur skriptgesteuerten Datenverarbeitung von Daten verwendet werden kann;
- Fig. 16: zeigt ein weiteres beispielhaftes Sequenzdiagramm, wie es bei dem erfindungsgemäßen Verfahren und der erfindungsgemäßen Vorrichtung zur skriptgesteuerten Datenverarbeitung von Daten verwendet werden kann;
- Fig. 17: zeigt ein weiteres beispielhaftes Sequenzdiagramm, wie es bei dem erfindungsgemäßen Verfahren und der erfindungsgemäßen Vorrichtung zur skriptgesteuerten Datenverarbeitung von Daten verwendet werden kann;
- Fig. 18: zeigt ein weiteres beispielhaftes Sequenzdiagramm, wie es bei dem erfindungsgemäßen Verfahren und der erfindungsgemäßen Vorrichtung zur skriptgesteuerten Datenverarbeitung von Daten verwendet werden kann;
- Fig. 19: zeigt ein Diagramm zur Erläuterung einer TürmatikFunktion als Anwendungsbeispiel für die erfindungsgemäße Vorrichtung und das erfindungsgemäße Verfahren zur skriptgesteuerten Datenverarbeitung von Daten;
- Fig. 20: zeigt beispielhaft eine mögliche Bedienoberfläche für ein mit der erfindungsgemäßen Vorrichtung verbundenes Anzeigegerät.

### BESCHREIBUNG DER AUSFÜHRUNGSBEISPIELE

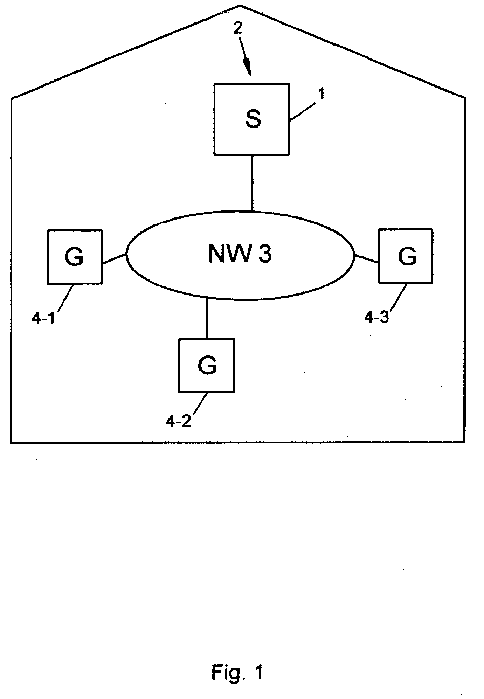

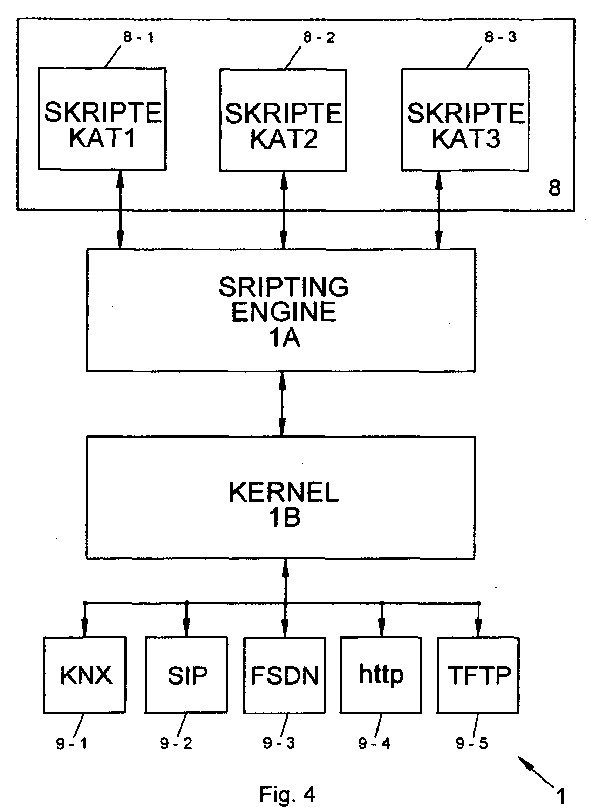

Wie man aus Fig. 1 erkennen kann, befindet sich eine erfindungsgemäße Vorrichtung 1 zur skriptgesteuerten Datenverarbeitung von Daten für ein Hauskommunikations- oder Hausautomationssystem 2 vorzugsweise in einem Gebäude oder einer Gebäudeanlage. Bei der Vorrichtung 1 kann es sich um einen zentralen Server oder um mehrere dezentrale Server eines Serververbundes handeln. Der Server ist, wie er in Fig. 1 und Fig. 4 dargestellt ist, an ein Datennetzwerk 3, beispielsweise ein Local Area Network LAN, angeschlossen. An dem Datennetzwerk 3 können mehrere bzw. eine Vielzahl von Geräten 4-1, 4-2, 4-3 innerhalb des Gebäudes 2 angeschlossen sein. Der Server 1 sowie die Geräte 4-i weisen vorzugsweise jeweils eine IP-Adresse auf, so dass die Geräte bzw. Endgeräte 4-i Datenpakete bzw. Nachrichten mit dem Server 1 über das Netzwerk 3 austauschen können. Der Server 1 verfügt über eine Schnittstelle zum Empfang der Datenpakete DP, welche an einem ersten Gerät, beispielsweise dem Gerät 4-1, über das Datennetzwerk 3 gemäß einem ersten Datenübertragungsprotokoll übertragen werden. Die jeweilige Schnittstelle verfügt über einen Protokolltreiber, welcher die in den empfangenen Datenpaketen DP enthaltenen Daten in ein internes Datenformat des Servers 1 umwandelt. Der Server 1 verfügt ferner über eine integrierte Skripting-Engine, die ein gespeichertes Anwendungsprogrammskript lädt. Dabei wird das Anwendungsprogrammskript beispielsweise aus einem Skriptspeicher 1A des Servers 1 zur Ausführung geladen. Die Skripting-Engine 1A verarbeitet die in dem internen Datenformat vorliegenden empfangenen Daten gemäß den in dem geladenen Anwendungsprogrammskript enthaltenen Anwendungsprogrammanweisungen. Die auf diese Weise verarbeiteten Daten werden durch einen weiteren Protokolltreiber ihrerseits in Datenpakete verpackt und gemäß einem zweiten Datenübertragungsprotokoll über eine Schnittstelle des Servers 1 zu einem zweiten Gerät, beispielsweise dem Gerät 4-2, übertragen. Die Anzahl der an dem Netzwerk 2 angeschlossenen Geräte bzw. Teilnehmer kann variieren. Eine IP-Adressierung lässt eine sehr hohe Anzahl von Teilnehmern bzw. Geräten, beispielsweise mehr als 1000 Teilnehmer, zu.

Die erfindungsgemäße Vorrichtung bzw. der erfindungsgemäße Access-Server 1 führt eine skriptgesteuerte Datenverarbeitung von Daten mit Hilfe von Anwendungsprogrammskripten durch, die beispielsweise in einem Skriptspeicher 8 der Vorrichtung 1 abgelegt sind. Diese Anwendungsprogrammskripte stellen die Systemintelligenz her, wobei die Anwendungsprogrammskripte durch den Anbieter des Hauskommunikations- oder Hausautomationssystems für den jeweiligen Anwendungsfall geschrieben bzw. programmiert werden können. Dabei ist es auch möglich, dass Entwicklungspartner bzw. Systemintegratoren derartige Anwendungsprogrammskripte schreiben bzw. programmieren und für das Hauskommunikations- bzw. Hausautomationssystem zur Verfügung stellen. Daher ist die erfindungsgemäße Vorrichtung 1 für verschiedenste Funktionen bzw. Abläufe flexibel programmierbar. Ein Anwendungsprogrammskript wird durch die Skripting-Engine 1A des Servers 1 aus dem Skript-Programmspeicher 8 geladen und die in dem geladenen Anwendungsprogrammskript enthaltenen Anwendungsprogrammanweisungen können bei einer möglichen Ausführungsform durch einen Interpreter interpretiert werden.

Bei einer möglichen Ausführungsform wird ein Quellcode des Anwendungsprogrammskripts durch den Interpreter direkt ausgeführt. Dabei ist es möglich, dass ein Quellcode des Anwendungsprogrammskripts zunächst in einen Zwischencode übersetzt wird, der anschließend ausgeführt wird. Bei einer weiteren möglichen Ausführungsvariante wird ein vorkompilierter Code des Anwendungsprogrammskripts durch den Interpreter ausgeführt. Die Anwendungsprogrammskripte, die sich in dem Skript-Programmspeicher befinden, können in verschiedenen Skriptsprachen programmiert vorliegen. Beispielsweise können die Anwendungsprogrammskripte in Perl, PHP oder Python programmiert sein. Andere mögliche Skriptsprachen sind Ruby oder TCL. Die Anwendungsprogrammskripte können für verschiedene Kategorien programmiert werden, beispielsweise Telefonanlagen-Skripte, Türkommunikationsskripte oder Gebäudeautomatisierungsskripte. Jede Kategorie weist dabei ein oder mehrere Anwendungsprogrammskripte auf. Die für die verschiedenen Kategorien geschriebenen bzw. programmierten Anwendungsprogrammskripte können sich in verschiedenen Programmspeichermodulen befinden. Diese Programmspeichermodule sind bei einer möglichen Ausführungsvariante austauschbar und können durch den Server 1 über eine Datenschnittstelle aus einem Speichermodul bei Bedarf ausgelesen werden. Beispielsweise kann ein Kooperationspartner oder Entwicklungspartner mehrere Anwendungsprogrammskripte für eine bestimmte Kategorie schreiben bzw. programmieren und dem Anbieter des Hauskommunikations- oder Hausautomationssystems 2 zur Verfügung stellen.

Es ist möglich, dass Skripte auch kategorieübergreifend aktiv werden können, beispielsweise bei der Kombination von Türkommunikation mit Schaltfunktionen.

Der in den Fig. 1, 4 dargestellte Server 1 enthält vorzugsweise einen Server-Kernel 1B, welcher primäre Basisdienste bereitstellt. Diese Basisdienste können einen Nachrichtenaustauschdienst zum internen Austausch von Nachrichten, einen Datenbankdienst zum Bereitstellen von Konfigurationsdaten sowie einen sogenannten Datastore-Dienst zum Bereitstellen von Laufzeitdaten aller Dienste des Servers 1 aufweisen. Neben diesen primären Basisdiensten kann der Server 1 als sekundäre Dienste Netzwerkdienste bereitstellen, insbesondere Standardnetzwerkdienste. Diese sekundären Dienste können bei einer möglichen Ausführungsform einen DHCP-(Dynamic Host Configuration Protocol)Dienst zur Vergabe von IP-Adressen für die verschiedenen Geräte, einen DNS-(Domain Name System)Dienst zur Adressauflösung, einen NTP-Dienst zur Zeitsynchronisation sowie einen TFTP-(Trivial File Transfer Protocol)Dienst zum Datentransfer zwischen Teilnehmern bzw. Geräten und dem Server 1 umfassen.

Der Server 1 verfügt bei einer bevorzugten Ausführungsform über mehrere Schnittstellen, insbesondere externe Schnittstellen zu dem Hauskommunikations- und Hausautomationssystem. Diese Schnittstellen weisen in einer möglichen Ausführungsform eine Feldbus-Schnittstelle, insbesondere eine KNX-Feldbus-Schnittstelle auf. Der KNX-Feldbus ist ein Nachfolger des EIB-Feldbusses (Europäischer Installationsbus) (EIB). Bei dem KNX-Bus werden Steuerfunktionen und Energieverteilung voneinander getrennt. Die Geräte sind über einen gemeinsamen Bus miteinander verbunden und können auf diese Weise Daten miteinander austauschen.

Neben einer Feldbus-Schnittstelle weist der Server 1 vorzugsweise eine SIP-(Session Initiation Protocol)Schnittstelle auf. Auf diese Weise ist eine Einbindung von standardkonformen SIP-Endgeräten in das System möglich.

Außerdem weist der Server 1 vorzugsweise eine Schnittstelle für Webservices, insbesondere eine http-Schnittstelle auf. Auf diese Weise ist es möglich, für Fremdanwendungen Informationen abzufragen und entsprechende Aktionen durch den Server 1 auszulösen.

Weiterhin kann der Server 1 mindestens eine Telefonanlagen-Schnittstelle aufweisen, beispielsweise eine ISDN-Schnittstelle. Ferner kann auch eine Schnittstelle zur Anbindung einer analogen Telefonanlage vorgesehen werden. Diese Schnittstellen erlauben eine Anbindung von TK-Anlagen an das System. Weitere mögliche Schnittstellen sind eine SNTP-Schnittstelle und eine CMTP-(Cytel Message Transport Protocol)Schnittstelle für ein Anzeigegerät.

Bei einer möglichen Ausführungsform erfolgt die Konfiguration des gesamten Systems an dem Server 1 mittels einer Nutzerschnittstelle bzw. einer Web-Oberfläche. Die im Rahmen einer Systemkonfiguration erstellten virtuellen Schaltgeräte können anschließend von berechtigten Teilnehmern bzw. Geräten genutzt werden. Sind beispielsweise entsprechende Tasten an Endgeräten bzw. Geräten 4-i mit Schaltfunktionen belegt, kann der Server 1 in der Gerätekonfiguration die notwendigen Anweisungen hinterlegen, um eine gewünschte Funktion anzusteuern. In einer anderen Ausführungsform kann zusätzlich über die Nutzer-Oberfläche des Servers 1 oder über ein an den Server 1 angeschlossenes Anzeigegerät, beispielsweise einen PC-Client, eine Übersicht über alle verfügbaren Schaltfunktionen angezeigt werden. Der Benutzer kann dabei die gewünschte Schaltfunktion direkt auswählen und nutzen. Dazu kann der Server 1 dem jeweiligen Teilnehmer in seiner Konfiguration Informationen zur Verfügung stellen über die konfigurierenden Steuerelemente bzw. Statuspunkte SP der Geräte sowie über den jeweiligen Datentyp der Statuspunkte SP. Die Schaltgeräte selbst können im Server 1 als Templates hinterlegt sein. Dabei wird vorzugsweise für jeden unterstützten Gerätetyp, beispielsweise KNX-Dimmer oder KNX-Schalter, ein eigenes Template vorgesehen. Dieses Template definiert vorzugsweise die für die jeweiligen Funktionen benötigten Gruppenadressen für den benötigten Datentyp. Weiterhin kann das Template die jeweils auf der Benutzeroberfläche zu verwendeten Oberflächenelemente, beispielsweise Slider, Textfelder oder Buttons, angeben. Sind für die einzelnen Elemente Minimal- oder Maximalwerte bzw. Schrittweiten notwendig, können diese entweder in dem Template direkt hinterlegt werden oder als Platzhalter über die Konfigurationsoberfläche bestimmt werden.

Der in den Fig. 1 und Fig. 4 dargestellte Server 1 stellt als primären Basisdienst einen sogenannten Datastore-Dienst bereit. Der Datastore-Dienst des Servers 1 stellt als Laufzeitdaten Statuspunkte SP bereit, die jeweils einen Zustand einer Gerätefunktion eines Gerätes, beispielsweise eines Gerätes 4-i, angeben. Dabei ist jedem Status- bzw. Schaltpunkt SP ein konfigurierbarer Datentyp fest zugeordnet, welcher durch den Datenbankdienst des Server-Kernels 1B des Servers 1 bereitgestellt wird. Ein Statuspunkt SP beschreibt einen Zustand einer Gerätefunktion. Dem Statuspunkt SP ist ein bestimmter Datentyp fest zugeordnet. Beispielsweise kann ein Raumtemperaturregler den Zustand "Temperatur" aufweisen, wobei Temperatur ein komplexer Datentyp ist mit den Feldern, "Dtype" und "Value". Beispielsweise kann ein Temperaturwert "25" für 25°C stehen. Bei einer Temperatur kann es sich sowohl um einen Ist-Zustand (gemessen von einem Temperatursensor) als auch um einen Soll-Zustand handeln. Ein Temperaturregler, der beide Werte liefert, d.h. sowohl Ist-Zustand als auch Soll-Zustand, hat demzufolge zwei Statuspunkte bzw. Schaltpunkte SP. Dabei kann einer der beiden Schalt- bzw. Statuspunkte SP als Eingabefeld dienen z.B. "Soll-Temperatur" und der andere Statuspunkt SP "Ist-Zustand" wird, vorzugsweise auf der Oberfläche als nicht editierbar, dargestellt, und dient lediglich zur Anzeige des Temperatur-Ist-Zustandes. Vorzugsweise hinterlegt der Skript-Programmierer des Anwendungsprogrammskripts zu den verschiedenen Statuspunkten SP jeweils eine Beschreibung, die vorzugsweise auf der Benutzeroberfläche dargestellt werden kann.

Die Wertänderung eines Statuspunktes SP bildet ein Auslöseereignis bzw. Event, durch welches die Skripting-Engine des Servers 1 dazu aktiviert wird, anhand der in dem Datenbankdienst des Server-Kernels vorzugsweise bereitgestellten Konfigurationsdaten ein zu dem jeweiligen Statuspunkt SP zugehöriges Anwendungsprogrammskript aus dem Skript- Programmspeicher zu laden. Verändert sich somit ein Wert eines Statuspunktes SP, kann dies einen Event bzw. ein Ereignis in der Skripting-Engine auslösen. Die Skripting-Engine 1A sucht dasjenige Anwendungsprogrammskript, welches für den betroffenen Statuspunkt bzw. Schaltpunkt SP zuständig ist. Dies geschieht vorzugsweise mit Hilfe der vom Datenbankdienst bereitgestellten Konfigurationsdaten. Das betroffene Anwendungsprogrammskript wird durch die Skripting-Engine 1A geladen und der aufgetretene Event bzw. das aufgetretene Ereignis wird durch die Skripting-Engine 1A an das geladene Anwendungsprogrammskript übergeben. Das Anwendungsprogrammskript kann eine oder mehrere Eventhändler enthalten, die in Reaktion auf das aufgetretene Ereignis eine oder mehrere Anwendungsanweisungen ausführen. Der Eventhändler führt eine Ereignisbearbeitung durch. Ein Event bzw. ein Ereignis kann beispielsweise darin bestehen, dass durch einen Nutzer eine Taste bzw. ein Schalter eines mit dem Server 1 verbundenen Gerätes 4-i gedrückt wird. Der entsprechende Schaltpunkt bzw. Statuspunkt SP, der beispielsweise vom Boolschen Datentyp ist, ändert infolge der betätigten Taste seinen Wert von "Aus" auf "An". Der dem Schalter zugeordnete Statuspunkt SP kann somit eine Wertänderung erfahren, sodass das zugehörige Anwendungsprogrammskript aus dem Skriptprogrammspeicher 8 geladen wird. Beispielsweise handelt es sich bei dem zugehörigen Anwendungsprogrammskript um ein Gebäudeautomatisierungsprogrammskript. Die Wertänderung des Statuspunktes SP bildet ein Auslöseereignis, das auf das geladene Anwendungsprogrammskript, d.h. durch das Gebäudeautomatisierungsskript, behandelt wird. Das geladene Anwendungsprogrammskript kann in Abhängigkeit von dem durch die Wertänderung des Statuspunktes SP hervorgerufenen Auslöseereignis mindestens einen anderen Statuspunktes SP' einer Gerätefunktion eines anderen oder des gleichen Gerätes als Folgeereignis ändern. Beispielsweise kann das Anwendungsprogrammskript infolge eines aufgetretenen Auslöseereignisses, z.B. aufgrund der Wertänderung des Schaltpunktes SP eines Schalters, beispielsweise eines Lichtschalters, den Schaltpunkt bzw. Statuspunktes SP' einer anderen Gerätefunktion als Folgeereignis ändern. Beispielsweise kann der Statuspunkt bzw. Schaltpunkt einer dem Lichtschalter zugeordneten Beleuchtungseinrichtung verändert werden. Zum Beispiel verändert sich der Statuspunkt SP' der Beleuchtungseinrichtung des angesprochenen Geräts ebenfalls von "Aus" auf "An". Beim Auftreten eines Folgeereignisses durch das geladene Anwendungsprogrammskript wird mindestens eine zugehörige Gerätefunktion eines Gerätes, beispielsweise der Beleuchtungseinrichtung, angesteuert, indem die verarbeiteten Daten von dem Server 1 als Steuerdaten in ein Datenpaket verpackt zu dem jeweiligen Gerät, beispielsweise der Beleuchtungseinrichtung, übertragen werden. Die Datenübertragung kann dabei entsprechend einem zugehörigen Datenübertragungsprotokoll, beispielsweise als KNX-Telegramm, erfolgen. Bei einer möglichen Ausführungsform wird eine durch ein Anwendungsprogrammskript hervorgerufene Wertänderung eines Statuspunktes SP infolge eines Auslöseereignisses oder infolge eines Folgeereignisses anhand der durch den Datenbankdienst bereitgestellten Konfigurationsdaten zusätzlich an andere Anwendungsprogrammskripte jeweils in einer Nachricht gemeldet, die eine derartige Meldung entsprechend den Konfigurationsdaten abonniert haben.

Beispielsweise kann ein Regelglied aus mehreren Statuspunkten bzw. Schaltpunkten SP bestehen, mittels derer man auf das Verhalten einwirken kann. Beispielsweise kann der oben angegebene Raumtemperaturregler mindestens den Statuspunkt "Ist-Zustand" und den Statuspunkt "Soll-Zustand" aufweisen. Ein derartiges Regelglied kann auch beispielsweise weitere Statuspunkte SP beinhalten. Beispielsweise kann ein Regelglied einen Schalter für Nachtabsenkung aufweisen sowie eine Uhrzeit beinhalten, wann diese Nachabsenkung automatisch erfolgen soll.

Die Gruppierung von Statuspunkten SP in einem Gerät kann in sogenannten Status Point Groups (SPG) erfolgen. Durch die Gruppierung der Statuspunkte SP wird eine Einheit gebildet, beispielsweise ein Regelglied. Die Status-Punkt-Gruppe SPG kann einen globalen Status definieren, die beispielsweise die Funktion Ein/Aus angibt. Die Status-Punkt-Gruppen SPG definieren auf diese Weise eine Kategorie, zu der die jeweilige Funktion gehört. Anhand der Kategorie kann die Statuspunktgruppe (SPG) auf der Oberfläche dargestellt werden. Es ist möglich, verschiedene Kategorien vorzudefinieren. Beispielsweise können SPG-Kategorien für Türfunktionen, Lichtfunktionen, Heizungs- und Klimafunktionen, Jalousienfunktionen, Zutrittskontrollfunktionen, Telekommunikationsfunktionen, statistische Funktionen, Sicherheitsfunktionen, Mediensteuerungsfunktionen, Energiemanagementfunktionen definiert werden. Es kann zwischen generischen und komplexen Datentypen unterschieden werden. Generische Datentypen umfassen insbesondere Boolsche Werte, Integer-Werte, Aufzählungswerte, Fließkommazahlen, Textfelder, Datum und Uhrzeit. Komplexe Datentypen können beispielsweise den Datentyp Temperatur, den Datentyp Temperaturdifferenz, eine eindeutige Identifizierung, einen Prozentwert, eine Geschwindigkeit, eine Winkelangabe, eine Lichtstärke, einen RGB-Farbwert, einen Druck, eine Energie oder eine Leistung aufweisen. Außerdem können für komplexe Datentypen verschiedene Anwendungen vorgesehen sein. Beispiele für komplexe Datentypen für die Telefonie sind beispielsweise ein Leitungsstatus, eine Rufumleitung oder eine Verfügbarkeit.

Der Statuspunkt bzw. Schaltpunkt SP bildet die kleinste Einheit, zu welcher ein Gerät für ein Anwendungsprogrammskript einen konkreten Zustand ablegt. Beispiele für einen solchen Statuspunkt SP ist beispielsweise der Zustand einer Lampe als "Ein" oder als "Aus".

Bei einer möglichen Ausführungsform ist der Server bzw. die Vorrichtung 1 über eine Schnittstelle mit einem Anzeigegerät, beispielsweise einem PC-Client, verbunden, der einem Nutzer die Wertänderung eines Statuspunktes SP anzeigt. Derartige Geräte können auch durch Telefone oder Haustelefone gebildet werden. Das Anzeigegerät kann Statuspunkte SP von dem Server 1 anfordern bzw. sich bei Änderungen von bestimmten Statuspunkten SP sich diese Änderungen vom Server 1 automatisch mitteilen lassen. Für die Statuspunkte SP stehen vordefinierte Datentypen bereit, die stets verwendet werden, um so ein einheitliches Datenmodell bzw. Datenformat zu gewährleisten. Auf diese Weise sinkt die Wahrscheinlichkeit für ein notwendiges Update der Anzeigegeräte bei einer funktionalen Erweiterung des Servers 1. Der Server 1 kommuniziert mittels Nachrichten mit den Anzeigegeräten sowie allen Schalt- bzw. Steuergeräten 4-i. Die Gerätefunktionen der verschiedenen Geräte können einerseits Sensorfunktionen und andererseits auch Aktorfunktionen umfassen. Es können verschiedene Schnittstellen zu den Anzeigegeräten vorgesehen werden. Beispielsweise kann eine sogenannte CMTP-(Cytel Message Transport Protocol)Schnittstelle für PC-Applikationen oder eine SNMP-Schnittstelle vorgesehen werden. Nachrichten, die der Server 1 zu einem Anzeigegerät schickt, bilden User Interface Indikationen UII, wobei alle Nachrichten, die ein Anzeigegerät zu dem Server 1 schickt, User Interface Befehle bzw. Commands UIC bilden. Ein Beispiel für eine User Interface Indikation UII ist die Meldung des Servers 1, dass sich der Wert eines Statuspunktes SP geändert hat. Ein mögliches Beispiel für ein User Interface Command UIC ist die Anforderung einer Überwachung eines bestimmten Statuspunktes SP. Weiterhin kann eine Anwendung den Server 1 benachrichtigen, dass die Überwachung einer oder aller Statuspunkte SP nicht mehr benötigt wird. Ein weiteres Beispiel für ein User Interface Command UIC besteht darin, dass ein Statuspunkt SP durch eine Anwendung verändert wird, beispielsweise durch Setzen eines absoluten Wertes. Weiterhin kann die Anwendung lediglich den Tastendruck eines Oberflächenelementes zu dem Server 1 senden und daraufhin von dem Server 1 eine Veränderung des zugehörigen Statuspunktes SP erwarten. Dieser User Interface Command UIC ist beispielsweise für Anzeigegeräte gedacht, die keinen komplexen Status auf ihrer Oberfläche darstellen können. Es können verschiedene zusätzliche User Interface Commands UIC als Taster bzw. Schalter vorgesehen sein. Beispiele für derartige Key Commands sind z.B. "Press", wenn ein Taster gedrückt ist (steigende Flanke), "Release", wenn ein Taster losgelassen wurde (fallende Flanke), "Double", wenn der Taster einen Doppelklick erkannt hat, und "Switch", wenn der Schalter ein- oder ausgeschaltet wird.

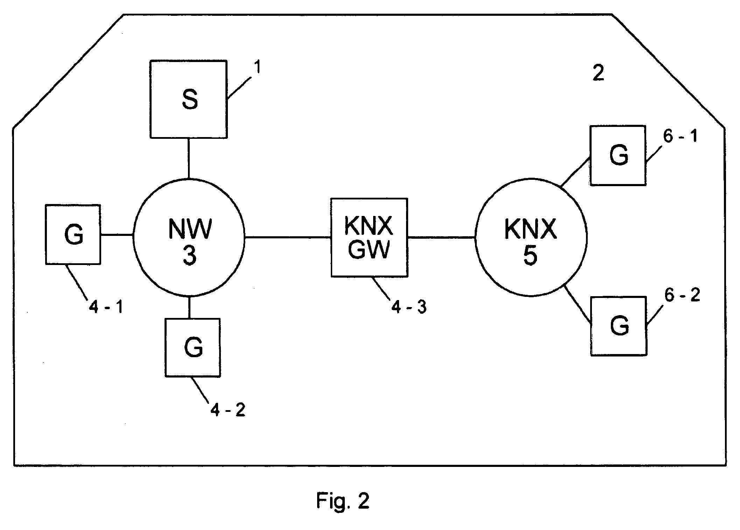

Fig. 2 zeigt ein weiteres Anwendungsbeispiel für ein Hauskommunikations- oder Hausautomationssystem 2, das die erfindungsgemäße Vorrichtung 1 zur skriptgesteuerten Datenverarbeitung von Daten einsetzt. In dem in Fig. 2 dargestellten Anwendungsbeispiel handelt es sich bei dem Gerät 4-3 nicht um ein Endgerät, sondern um ein Gateway GW zu einem anderen Datennetzwerk. Im dargestellten Beispiel ist das Gateway 4-3 ein KNX-Gateway zu einem KNX-Feldbus 5. An dem KNX-Bus 5 können weitere Geräte 6-1, 6-2 angeschlossen sein, die untereinander entsprechend dem KNX-Protokoll kommunizieren. Der Server 1 verfügt vorzugsweise anhand seiner Konfigurationsdaten über die Netzwerktopologie des KNX-Bussystems 5. Das KNX-Gateway 4-3 überträgt Daten bzw. Datenpakete bidirektional zwischen dem Netzwerk 3 und dem KNX-Feldbus 5. Wird beispielsweise von einem Endgerät, das an dem Datennetzwerk 3 angeschlossen ist, beispielsweise dem Endgerät 4-1, ein Befehl zur Steuerung einer Gerätefunktion eines an dem KNX-Feldbus 5 angeschlossenen Gerätes 6-i über das Datennetzwerk 3 zu einer Schnittstelle des Servers 1 übertragen, erfolgt die erste Datenübertragung gemäß einem ersten Datenübertragungsprotokoll, beispielsweise einem IP-Datenübertragungsprotokoll. Die über die Schnittstelle vom Server 1 empfangenen Datenpakete werden mittels eines zugehörigen Protokolltreibers in ein internes Datenformat des Servers 1 umgewandelt. Dabei werden die in dem Datenpaket enthaltenen Nutzdaten entpackt und durch die Skripting-Engine 1A des Servers 1 entsprechend dem Anwendungsprogrammskript verarbeitet. Die verarbeiteten Daten werden durch einen anderen Protokolltreiber des Servers 1, beispielsweise durch einen KNX-Protokolltreiber, in Datenpakete bzw. Nachrichten verpackt und gemäß einem zweiten Datenübertragungsprotokoll über das KNX-Gateway 4-3 und dem KNX-Feldbus 5 zu einem KNX-Endgerät 6-i übertragen. Der Server 1 übersetzt gewissermaßen die Daten bzw. das Datenübertragungsprotokoll eines Gerätes 4-i in die Sprache bzw. das Datenübertragungsprotokoll eines KNX-Gerätes 6-i. Der in Fig. 2 dargestellte Server 1 enthält hierzu über eine integrierte Skripting-Engine 1A sowie einen KNX-Protokolltreiber. Der Protokolltreiber des Servers 1 dient dabei zur Konvertierung bzw. Transformierung der Daten auf ein internes Datenformat des Servers 1, das mit Hilfe eines anderen Protokolltreibers des Servers 1 in ein anderes Datenübertragungsprotokoll umgewandelt werden kann.

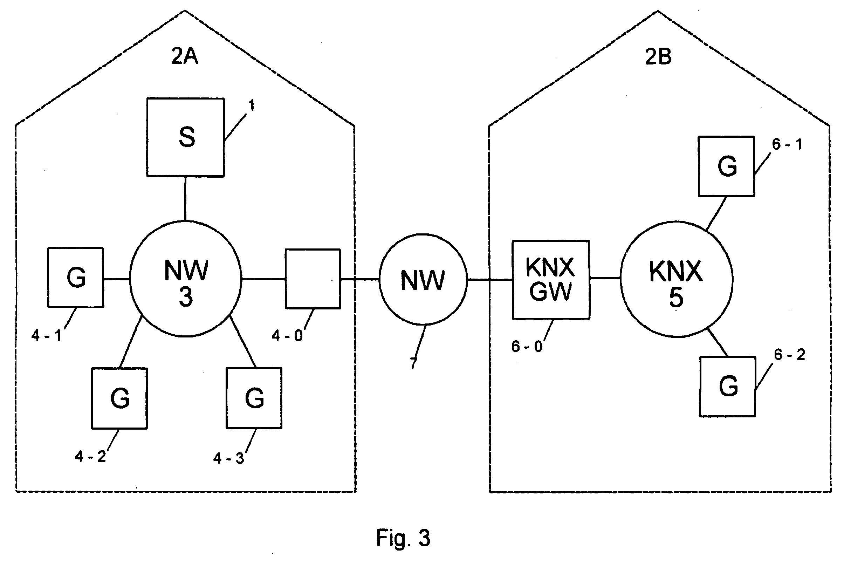

Fig. 3 zeigt ein weiteres Anwendungsbeispiel für ein Hauskommunikations- oder Hausautomationssystem 2, in dem die erfindungsgemäße Vorrichtung 1 zur skriptgesteuerten Datenverarbeitung von Daten eingesetzt wird. In dem in Fig. 3 dargestellten System sind zwei getrennte Datennetzwerke, nämlich das Datennetzwerk 3 und der KNX-Feldbus 5, in verschiedenen Gebäuden 2A, 2B vorgesehen, wobei die beiden Datennetzwerke über Gateways 4-0, 6-0 über ein dazwischen liegendes öffentliches Netzwerk 7, beispielsweise das Internet, verbunden sind. Auf diese Weise kann der Server 1 auch Gerätefunktionen von weit entfernten Geräten, beispielsweise den in Fig. 3 dargestellten KNX-Endgeräten 6-1, 6-2, ansteuern. Die Übertragung der Datenpakete über das Internet erfolgt beispielsweise über das TCP-IP-Datenübertragungsprotokoll.

Bei den Endgeräten kann es sich neben fest installierten Endgeräten auch um mobile Endgeräte eines Nutzers handeln. Beispielsweise kann ein Endgerät durch ein mobiles Telefongerät gebildet werden, das über ein öffentliches Mobilfunknetz mit dem Server 1 kommuniziert. Auf diese Weise ist es beispielsweise möglich, dass ein Nutzer durch eine entsprechende Eingabe in sein mobiles Telefongerät Gerätefunktionen des Hauskommunikations- oder Hausautomationssystems steuert bzw. entsprechende Statusinformationen erhält. Beispielsweise kann der Nutzer auf diese Weise mittels eines mobilen Funkgerätes Geräte 6, beispielsweise eine Rollladensteuerung, die in seinem Haus angebracht ist, ansteuern. Beispielsweise kann ein Anwendungsprogrammskript beim Empfang eines entsprechenden Befehls in einem Datenpaket mehrere Rollladensteuerungen, bei denen es sich beispielsweise um KNX-Endgeräte 6-1, 6-2 handeln kann, gleichzeitig ansteuern. Ein anderes Beispiel für ein Anwendungsskript ist ein Skript, das die Rollladensteuerungen im ersten Stock des Hauses zum Öffnen der Rollläden ansteuert, während die Rollladensteuerungen im Erdgeschoss des Hauses die Rollläden schließen.

Die Ansteuerung der verschiedenen Gerätefunktionen erfolgt entsprechend des im Server 1 gespeicherten Anwendungsprogrammskriptes. Es ist auch möglich, dass ein Nutzer mit Hilfe eines Editors für seine Zwecke ein eigenes Anwendungsprogrammskript programmiert bzw. schreibt und in dem Skriptspeicher des Servers 1 ablegt. Außerdem ist es möglich, dass der Nutzer verschiedene Anwendungsprogrammskripte von einem Anbieter bezieht und die darauf gespeicherten Anwendungsprogrammskripts ausliest. Beispielsweise können Anwendungsprogrammskripts mittels USB-Sticks an Nutzer ausgeliefert werden. Auch ein Download eines Anwendungsprogrammskripts über das Internet ist möglich. Bei einem komplexen Hauskommunikations- oder Hausautomationssystemen 2 erfolgt die Programmierung des Anwendungsprogrammskripts typischerweise nicht durch einen Endnutzer, sondern durch einen erfahrenen Programmierer, der die Hauskommunikations- oder Hausautomationsanlage installiert.

Fig. 4 zeigt schematisch den Aufbau der erfindungsgemäßen Vorrichtung 1 zur skriptgesteuerten Datenverarbeitung von Daten für ein Hauskommunikations- oder Hausautomationssystem. Der Server 1 verfügt über mindestens eine Skripting-Engine 1A, die mit einem Server-Kernel 1B verbunden ist. Die Skripting-Engine 1A hat Zugriff auf verschiedene Anwendungsprogrammskripte verschiedener Kategorien. Diese Anwendungsprogrammskripte können sich in einem Skript-Programmspeicher 8 befinden, und durch die Skripting-Engine 1A zur Ausführung geladen werden. Die verschiedenen Anwendungsprogrammskripte für die verschiedenen Kategorien können sich in verschiedenen Speichermodulen 8-1, 8-2, 8-3 befinden, wie in Fig. 4 dargestellt. Beispielsweise handelt es sich bei den Anwendungsprogrammskripten der ersten Kategorie um Anwendungsprogrammskripte einer Telefonanlage. Weiterhin kann es sich bei den Anwendungsprogrammskripten der zweiten Kategorie, die in dem zweiten Speichermodul 8-2 gespeichert sind, um Anwendungsprogrammskripte einer Türkommunikationsanlage handeln. Weiterhin kann es sich bei den Skripten der Kategorie 3 um Anwendungsprogrammskripte für eine Gebäudeautomatisierung handeln, die beispielsweise in dem Speichermodul 8-3 gespeichert sind. Die verschiedenen Speichermodule 8-1, 8-2, 8-3 können von verschiedenen Herstellern bzw. Anbietern bereitgestellt werden, beispielsweise von dem Anbieter des Hauskommunikations- oder Hausautomationssystems 2 oder von dessen Entwicklungspartnern. Ferner kann ein Programmierer oder Nutzer andere Anwendungsprogrammskripte für die jeweilige Hausanlage programmieren und speichern. Der Server-Kernel 1B hat Zugriff auf verschiedene Protokolltreiber, beispielsweise auf die Protokolltreiber 9-1 bis 9-5, wie sie in Fig. 4 dargestellt sind. Im dargestellten Beispiel hat der Server-Kernel 1B Zugriff auf einen KNX-Protokolltreiber, einen SIP-Protokolltreiber, einen ISDN-Protokolltreiber, einen http-Protokolltreiber sowie auf einen TFTP-Protokolltreiber. Wird beispielsweise über eine SIP-Schnittstelle ein Datenpaket gemäß dem SIP-Datenübertragungsprotokoll empfangen, wandelt der Server 1 mittels des zugehörigen SIP-Protokolltreibers 9-2 die in den empfangenen Datenpaketen enthaltenen Daten, bei denen es sich ihrerseits um geschachtelte Datenpakete handeln kann, in sein internes Datenformat um. Die Skripting-Engine 1A lädt entsprechend den Konfigurationsdaten ein gespeichertes Anwendungsprogrammskript, welches die nunmehr in dem internen Datenformat vorliegenden empfangenen Daten verarbeitet. Die dabei entstehenden verarbeiteten Daten können durch einen anderen Protokolltreiber in ein Datenpaket verpackt werden und gemäß einem zweiten Datenübertragungsprotokoll über eine andere Schnittstelle des Servers 1 zu einem weiteren Gerät übertragen werden.

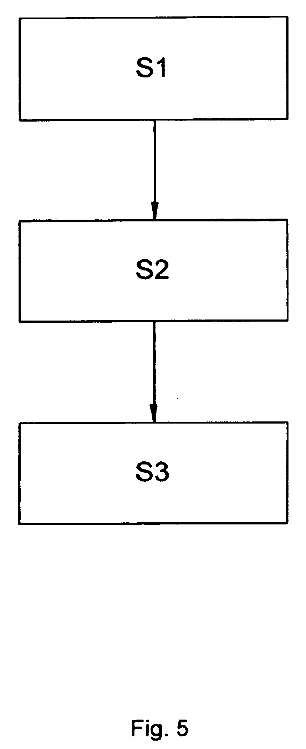

Fig. 5 zeigt ein einfaches Ablaufdiagramm zur Darstellung einer möglichen Ausführungsform des erfindungsgemäßen Verfahrens zum skriptgesteuerten Verarbeiten von Daten für ein Hauskommunikations- oder Hausautomationssystem durch einen Server.
In einem ersten Schritt S1 werden die Daten, die der Server 1 in ein Datenpaket gemäß einem ersten Datenübertragungsprotokoll von einem ersten Gerät empfängt mit Hilfe eines zugehörigen Protokolltreibers des Servers 1 in ein internes Datenformat umgewandelt.

In einem weiteren Schritt S2 werden die in dem internen Datenformat des Servers 1 vorliegenden Daten gemäß den Anweisungen des geladenen Anwendungsprogrammskripts des Servers 1 verarbeitet. Dies erfolgt vorzugsweise anhand von Statuspunkten SP, die jeweils einen Zustand einer Gerätefunktion eines Gerätes angeben.

Schließlich erfolgt in einem Schritt S3 die Verpackung der verarbeiteten Daten durch einen Protokolltreibers des Servers 1 in Datenpakete, die gemäß einem zweiten Datenübertragungsprotokoll von dem Server 1 zu einem zweiten Gerät, beispielsweise einem KNX-Gerät, übertragen werden.

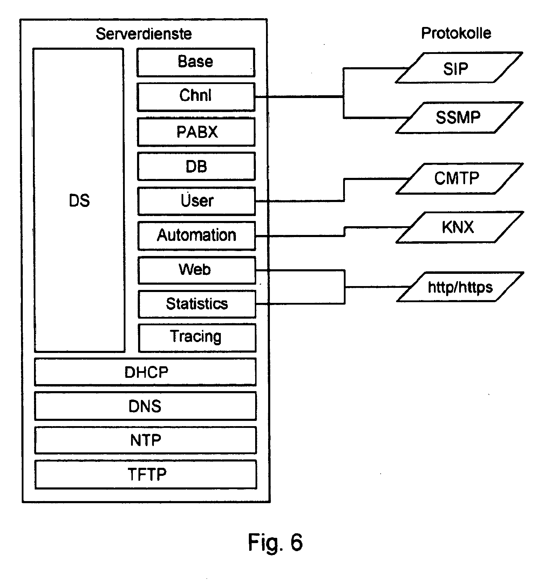

Fig. 6 zeigt ein weiteres Beispiel für einen erfindungsgemäßen Access-Server 1, wie er bei dem Hauskommunikations- oder Hausautomationssystem 2 eingesetzt werden kann.

Wie man in Fig. 6 erkennen kann, weist der Server 1 als zentrale Schnittstelle einen Datastore-Dienst DS auf, auf dem sich sämtliche Laufzeitdaten der anderen Dienste befinden. Auf diesem Weg können die übrigen Dienste des Servers 1 Daten austauschen und gemeinsam nutzen. Der Datastore DS kann sich bei einer möglichen Ausführungsform in einem Arbeitsspeicher befinden.

Neben dem Datastore DS weist der Server 1 Primärdienste zur Kontrolle, Verwaltung und Durchführung von Veränderungen innerhalb des Systems auf.

Die Primärdienste sind bei dem in Fig. 6 dargestellten Ausführungsbeispiel Basisdienste, die u. a. auch die Skripting-Engine 1A des Servers 1 umfassen. In einem Channel-Dienst Chnl wird alles behandelt, was mit einer Leitung zu tun hat, beispielsweise SIP, ISDN etc. Ein PABX-Dienst übernimmt die unmittelbare Steuerung des Channel-Dienstes, wobei der PABX-Dienst eine TK-Logik darstellen kann.

Der Datenbankdienst DB stellt die Dienste einer angeschlossenen Datenbank zur Verfügung. Dabei kann es sich beispielsweise um eine SQL-Datenbank handeln. Der Datenbankdienst DB dient zur Bereitstellung von Konfigurationsdaten. Die Daten werden dabei grundlegend so verteilt, dass Konfigurationsdaten im Datastore DS als Kopie für einen schnellen Zugriff abgelegt werden, während Massendaten in der Datenbank verbleiben.

Ein User-Dienst USER kann einen CTI-Client des Servers 1 verwalten.

Ein Automation-Dienst des Servers 1 ist zuständig für alle anfallenden Steuer- und Automationsaufgaben des Systems, beispielsweise für einen Türöffner oder eine KNX-Einbindung.

Der in Fig. 6 dargestellte Webdienst WEB stellt sämtliche http-basierten Dienste zur Verfügung.

Ferner kann der Server 1 einen Statistics-Dienst aufweisen. Die Administration kann über diesen Dienst an interne Systeminformationen und Statistiken gelangen, ohne diese Berechnungen bei jedem Aufruf selbst erneut durchführen zu müssen. Der Dienst "Statistics" ergänzt den Webserver-Dienst.

Ferner kann der Server 1 über einen sogenannten Tracing-Dienst verfügen, der das gesamte Login im System übernimmt. Dazu kann auch die Zurverfügungstellung einer Syslog-Schnittstelle für die Netzwerkteilnehmer und eine zentrale Auswertung der Logdaten inklusive vorhandener Schlüsselwörter gehören.

Darüber hinaus verfügt der Server 1, wie in Fig. 6 dargestellt, über Sekundärdienste, insbesondere Standardnetzwerkdienste. Die Sekundärdienste umfassen insbesondere einen DHCP-Server-Dienst, einen DNS-Server-Dienst, einen NTP-Server-Dienst sowie einen TFTP-Server-Dienst.

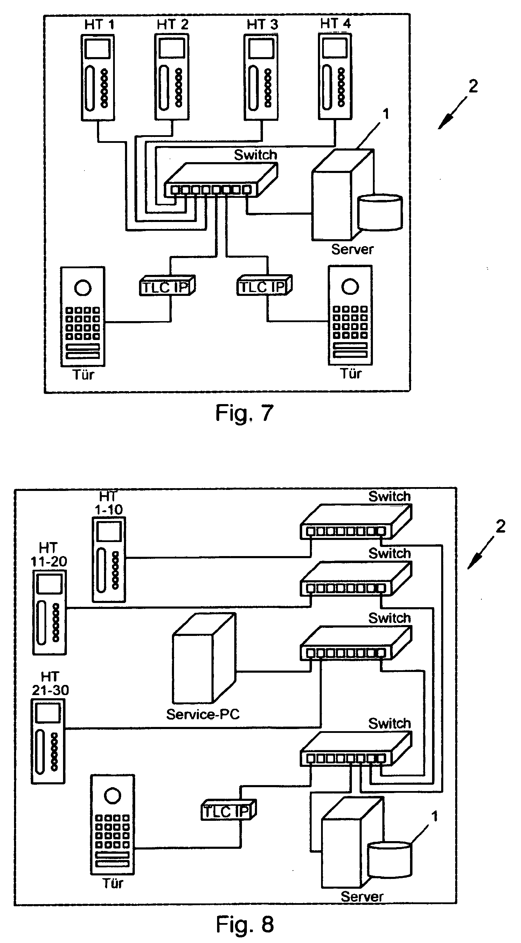

Die Fig. 7 bis 12 zeigen verschiedene Netzszenarien für das erfindungsgemäße Hauskommunikations- oder Hausautomationssystem 2. Das System ist in der Lage, in ein Gebäude verschiedene Kommunikations- und Datendienste auf einer IP-basierten Netzwerkinfrastruktur abzubilden. Dabei ist das System offen und flexibel im Hinblick auf die unterschiedlichen Gebäudestrukturen.

Fig. 7 zeigt ein Netzszenario, bei der eine Tür- und Hauskommunikationsanlage als Insellösung betrieben wird. Die Insellösung beinhaltet in der kleinsten Ausbaustufe mindestens zwei Systemteilnehmer, zusätzlich zu einen Access-Server 1 und einen Switch. In Fig. 7 wird eine Anlage als Insellösung mit zwei Türen, vier Sprechstellen, einem Switch und einem Server 1 vorgestellt. Die dargestellte Verkabelung stellt nur eine grobe Skizze dar und ist nicht repräsentativ für eine strukturierte Verkabelung bei einem Nutzer. Die Systemteilnehmer sind grundsätzlich wahlfrei anwählbar. Der Server 1 steuert den Verbindungsaufbau und den Verbindungsabbruch sowie das Verteilen der Audio- und Videodaten. Für Wartungs- und Konfigurationsarbeiten besteht zudem die Möglichkeit, sich über das IP-Netzwerk mittels eines PCs in das System einzuwählen.

In Fig. 8 ist ein weiteres Netzszenario dargestellt, bei dem es sich um ein etwas größeres System mit einer Tür und mehreren Sprechstellen handelt. Diese sind über mehrere Etagen in einem Gebäude verteilt. Der Unterschied zu dem in Fig. 7 dargestellten Beispiel liegt in der höheren Anzahl der Teilnehmer und der etwas größeren benötigten Netzwerkinfrastruktur. Für die Anzahl der Endgeräte werden bei dem dargestellten Netzwerk mehrere Switches benötigt, die untereinander vernetzt sind. Für einen Hausmeister bzw. Systemverwalter ist in dem dargestellten Netzszenario zusätzlich ein Service-PC mit einem permanenten Netzwerkzugang fest installiert.

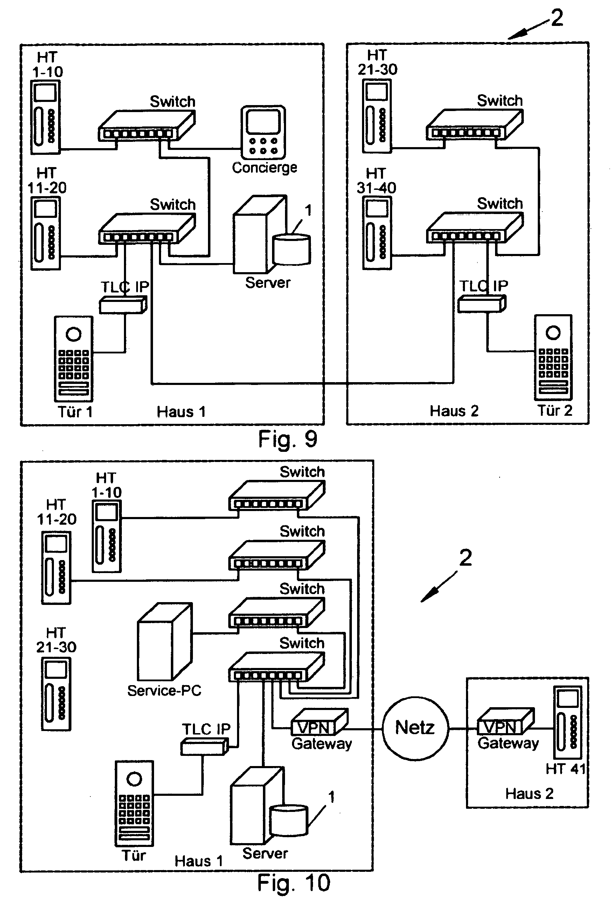

Fig. 9 zeigt ein weiteres Netzwerkszenario, bei dem die erfindungsgemäße Vorrichtung bzw. der erfindungsgemäße Server 1 zur skriptgesteuerten Datenverarbeitung von Daten eingesetzt ist. In dem dargestellten Beispiel sind die Endgeräte auf zwei Gebäude verteilt. Das in dem ersten Gebäude befindliche Concierge- bzw. das Anzeigegerät ist für das gesamte System zuständig. Im einfachsten Fall kann die Verbindung zwischen den Gebäuden in dem dargestellten Netzszenario mittels einer Ethernet-Direktverbindung aufgebaut werden. Die Übertragungswege sind beispielsweise Fast- bzw. Gigabit-Ethernet über eine Glasfaserverbindung. Ein möglicher Anwendungsfall ist beispielsweise die Anbindung eines zweiten Nebengebäudes mit einigen wenigen Teilnehmern an das Access- bzw. Hauskommunikations- oder Hausautomationssystem, wobei das Vorsehen eines zweiten Servers in diesem Falle zu aufwändig ist.

Fig. 10 zeigt ein weiteres Anwendungsbeispiel für ein Hauskommunikations- und Hausautomationssystem, welches einen erfindungsgemäßen Server 1 zur skriptgesteuerten Datenverarbeitung von Daten verwendet. Das dargestellte Netzwerkszenario zeigt die Anbindung eines entfernten Teilnehmers bzw. Nutzers an das System unter Verwendung eines Gateways. Aus Sicht des Hauskommunikations- oder Hausautomationssystems 2 gibt es keinen Unterschied zwischen dem entfernten und dem lokalen Teilnehmer bzw. Gerät. Der entfernte Teilnehmer wird bei dem dargestellten Beispiel über einen VPN-Tunnel mit dem Kommunikations- oder Hausautomationssystem verbunden. Ein Anwendungsfall wäre beispielsweise ein Apotheker, welcher außerhalb der Geschäftszeiten der Apotheke nur privat in einem Haus zu erreichen ist und auf diese Weise auf Notfälle reagieren kann.

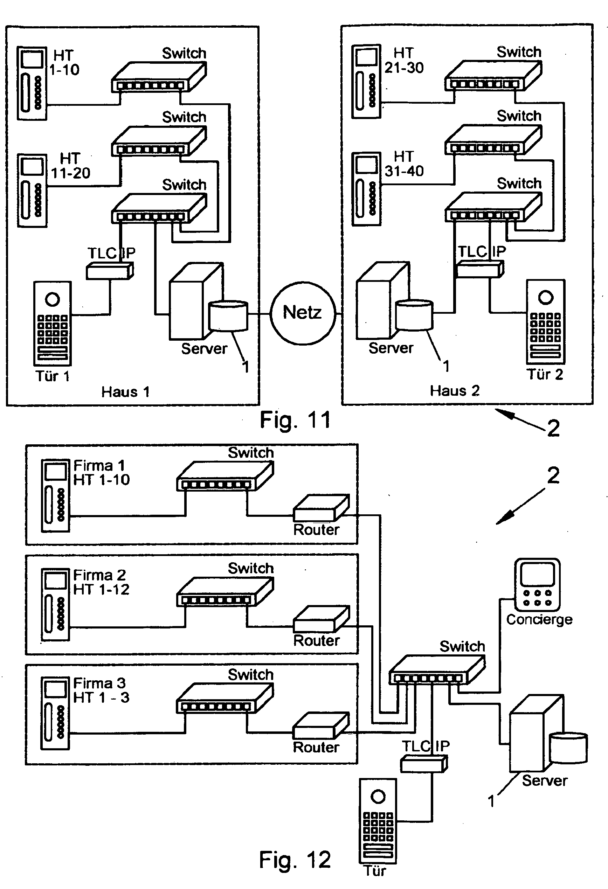

Fig. 11 zeigt ein weiteres Netzwerkszenario für ein Hauskommunikations- oder Hausautomationssystem 2, welches erfindungsgemäße Server 1 zur skriptgesteuerten Datenverarbeitung verwendet. In dem in Fig. 11 dargestellten Anwendungsszenario sind zwei eigenständige Netzwerke miteinander gekoppelt und synchronisiert. Jedes der beiden Teilnetzwerke verfügt über einen eigenen Server 1. Dabei funktionieren die Verbindungen innerhalb des ersten Hauses völlig unabhängig von den Verbindungen innerhalb des zweiten Hauses. Über die netzübergreifenden Verbindungen leiten die beteiligten Server 1 eine Nachricht bzw. einen Ruf in das gewünschte Zielnetz. Die beiden benachbarten Netze werden bei dem dargestellten Beispiel über einen VPN-Tunnel mittels eines Gateways oder direkt verbunden. Die Server 1 können bei einer möglichen Ausführungsform über eine zweite Netzwerkkarte miteinander synchronisiert werden. Ein Anwendungsfall für das in Fig. 11 dargestellte Netzszenario wäre beispielsweise eine große Wohnanlage mit mehreren Häusern. Dabei finden in allen Häusern die internen Verbindungen innerhalb des eigenen Netzes statt. Pförtner haben beispielsweise die Möglichkeit, übergreifend über alle Server 1 hinweg alle Teilnehmer zu rufen und umgekehrt können alle Teilnehmer den Pförtner anrufen.

Fig. 12 zeigt ein weiteres Netzszenario für ein Hauskommunikations- oder Hausautomationssystem gemäß der Erfindung. Fig. 12 zeigt exemplarisch die Situation in einem Gebäude mit mehreren für sich eigenständigen Netzen, wobei diese eigenständigen Netze beispielsweise von verschiedenen Firmen benutzt werden. Diese Netze beeinflussen sich dabei nicht gegenseitig. Daher werden in diesem Anwendungsfall Gateways bzw. Routers verwendet, um die jeweiligen Netze von dem zentralen Zugangsnetz zu trennen. Innerhalb der lokalen Netze kann die Konfiguration unabhängig von den anderen Netzen erfolgen.

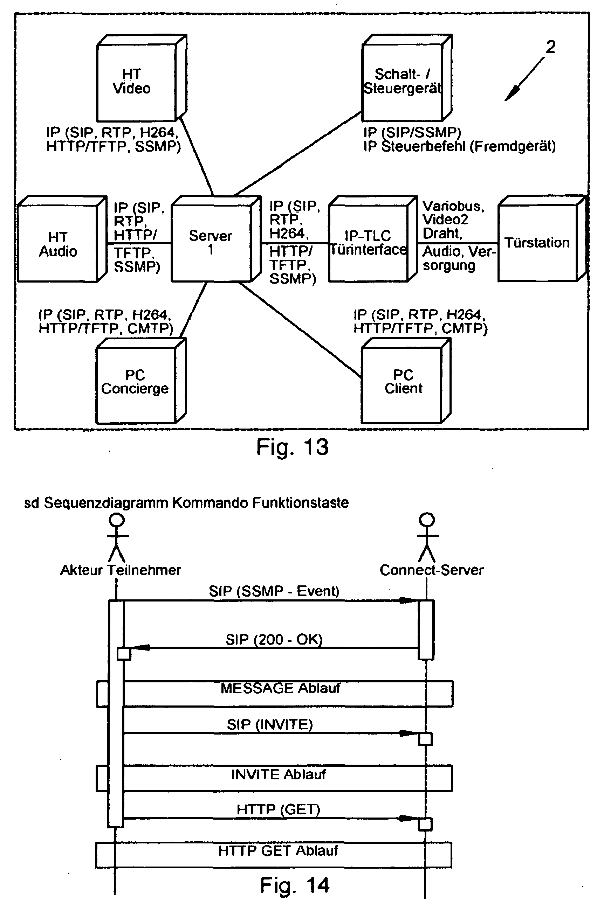

Fig. 13 zeigt schematisch die Zusammensetzung des erfindungsgemäßen Hauskommunikations- oder Hausautomationssystems 2 mit einem Server 1 auf Protokollebene. Wie man aus Fig. 13 erkennen kann, verwendet das erfindungsgemäße System ICP/IP-Protokolle mit entsprechenden Erweiterungen. Weiterhin können Standardprotokolle, wie RTP, RTCP, SNTP, FTP/TFTP, MTTP, HTTPS verwendet werden. Ein proprietäres Protokoll, wie beispielsweise SSMP (Siedle SIP Message Protocol), kann zudem für die Signalisierung/Steuerung zu Endgeräten vorgesehen sein. Als proprietäres Protokoll kann ferner ein CMTP (Cytel Message Transport Protocol) für die Signalisierung bzw. Steuerung zu einem Anzeigegerät bzw. PC verwendet werden.

Die Signalisierung erfolgt vorzugsweise auf Basis der SIP-Standardfamilie. Dabei erfolgt die Signalisierung grundsätzlich immer über den Access-Server 1, welcher einen SIP-Protokolltreiber enthält. Auch die Audio- und Videodaten werden vorzugsweise stets über den Server 1 geleitet. Der SIP-Serverdienst zur Steuerung vermittelt Rufe von entsprechenden Teilnehmern weiter und steuert die Verteilung der Audio- und Videodaten. Dabei ist es möglich, die Audio- und Videodaten an unterschiedliche Geräte bzw. Endgeräte zu senden, wobei die Verwaltung der IP-Adressen für RTP innerhalb von SIP ausgelegt ist. Für den Teilnehmer bzw. ein Gerät kann ein individuelles Keep Alive, d.h. ein bestimmter abgegrenzter Zeitraum, in dem der Teilnehmer sich bei dem Access-Server 1 zurückmelden muss, konfiguriert werden. Dies kann bei einer möglichen Variante mit Hilfe eines UDP-Sockets realisiert werden, bei dem ein Teilnehmer bzw. ein Gerät seine Anwesenheit zyklisch bestätigen kann. Weiterhin kann ein regelmäßig zu wiederholendes SIP-Register oder ein Nat-Refresh eingesetzt werden.

In dem Hauskommunikations- bzw. Hausautomationssystem 2 kommen für die Kommunikation zwischen den Teilnehmern bzw. Geräten und der Systemverwaltung je nach Anwendungsfall verschiedene Protokolle zum Einsatz. Hierbei können neben den Standardkommunikationsprotokollen, wie SIP, STP, RTP, HTTP usw., für den Datenaustausch zur Steuerung der Endgeräte mit dem Server 1 auch proprietäre Protokolle zum Einsatz kommen, beispielsweise das SSMP (Siedle SIP Message Protocol) sowie das CMTP (Cytel Message Transport Protocol).
Rufe bzw. Nachrichten können verschiedene Prioritätsstufen aufweisen. Rufe gleichen Typs genießen generell eine Prioritätsstufe. Weiterhin können in dem Server 1 an verschiedenen Stellen Time Outs realisiert werden, um eingefrorene Abläufe und unnötig besetzte Sprechwege wieder freizugeben. Weiterhin können hiermit ausgefallene Teilnehmer erkannt werden. In dem erfindungsgemäßen Hauskommunikations- und Hausautomationssystem 2 kennt der Server 1 die logische Verbindung der Teilnehmer. Auf diese Weise ist gewährleistet, dass alle Geräte bzw. Endgeräte in dem System miteinander arbeiten und kommunizieren können, solange der Server 1 in der Lage ist, sie anzusprechen, selbst über Netzgrenzen hinaus, sei es SIP-Endgeräte mit KNX-Steuergerät oder ISDN-Telefonleitungen.

Bei einer möglichen Ausführungsform des erfindungsgemäßen Hauskommunikations- oder Hausautomationssystems 2 erfolgt der Datenverkehr in abgesicherter Form, d. h. verschlüsselt. Alle Endgeräte erhalten dabei von dem Server 1 einen geheimen Schlüssel, einen sogenannten Private Key. Dieser kryptographische Schlüssel kann für alle Endgeräte identisch sein. In diesem Falle muss der Server 1 für alle Geräte des Systems nur einen Gegenschlüssel, den sogenannten Public Key, vorhalten. Der Private Key der Endgeräte kann bei der Anmeldung beim Server 1 übertragen werden und ist ebenfalls gesichert durch ein bekanntes "Shared Secret", das nur an dieser Stelle verwendet wird. Vorzugsweise wird mit dem kryptographischen Schlüssel des Endgerätes, d. h. dem Private Key, jedes Datenpaket der Endgeräte in Kombination mit einem Zeitstempel signiert. Ferner kann die Systemzeit durch den Server 1 in bestimmten Zeitintervallen synchronisiert werden. Datenpakete können eine bestimmte Gültigkeit haben, beispielsweise für die Dauer von 120 Sekunden. Auf diese Weise werden effektiv sogenannte Replay Attacken verhindert.

Tritt in dem Hauskommunikations- oder Hausautomationssystem ein Ereignis bzw. Event ein, kann dies eine Aktion auslösen. Dabei kann die Aktion von der Art des Ereignisses abhängen, beispielsweise ob es sich um eine Signal-Flanke oder um einen Doppelklick handelt.

Fig. 14 zeigt beispielhaft ein Sequenzdiagramm für ein Kommando Funktionstaste. Soll beispielsweise eine Kommunikationsverbindung zur Abfrage einer eigenen Mailbox aufgebaut werden, wird eine SIP-Invite-Nachricht mit der entsprechend benötigten Zieladresse ausgeführt. Wird stattdessen eine andere Aktion im System gewünscht, beispielsweise das Öffnen einer Tür, kommt beispielsweise der Mechanismus SIP-Message (SSMP) zum Einsatz. Soll ein Menü lokal angezeigt werden, kann beispielsweise http-GET zum Einsatz kommen, um den entsprechenden XML-Datensatz vom Server 1 zu laden.

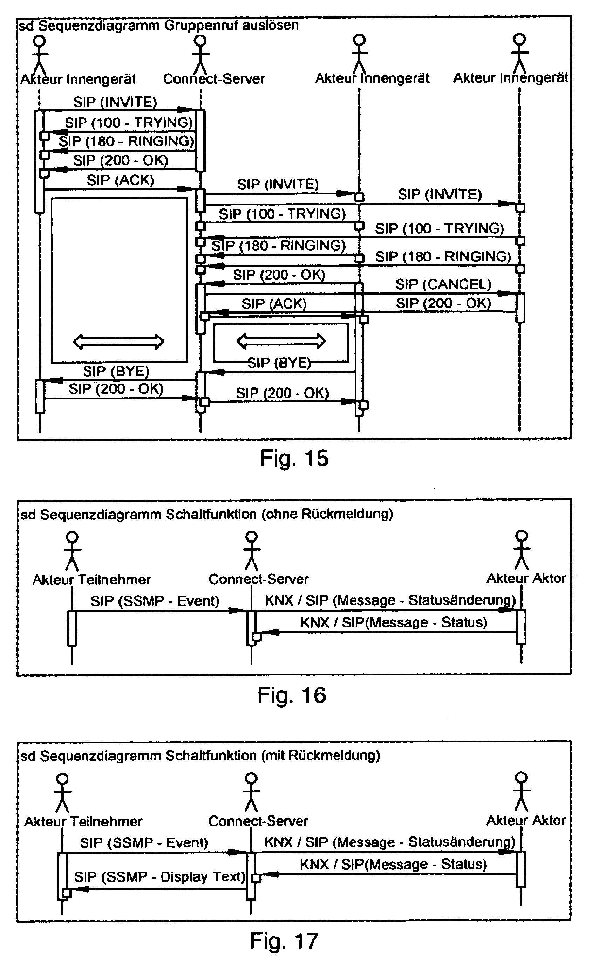

Fig. 15 zeigt beispielhaft ein weiteres Sequenzdiagramm für einen Einzelruf, wobei ein Teilnehmer bzw. Gerät ein SIP-Invite zu dem Server 1 mit der Zieladresse des gewünschten Rufzieles aussendet. Die notwendige Adresse befindet sich beispielsweise in Tastenprofilen des Endgerätes bzw. dem jeweiligen Eintrag in einem XML-Menü. Der Server 1 nimmt den Ruf entgegen und baut eine Verbindung zum Rufziel auf. Nimmt nun der angerufene Teilnehmer den Ruf an, stellt der Server 1 eine Kommunikationsverbindung zu beiden Teilnehmern her und verbindet dies, wie in Fig. 15 dargestellt. Nach Beenden des Gesprächs wird die Kommunikation geordnet mittels SIP beendet. Handelt es sich bei dem Ruf um einen Türdirektruf, ist die Tür nur dann erreichbar, wenn nicht bereits ein Gespräch der Tür mit einem anderen Teilnehmer stattfindet. Die Tür nimmt einen eingehenden Ruf automatisch an.

Je nach Teilnehmertyp bzw. Gerätetyp kann der Server 1 auch alternativ eine Verbindung mit dem anrufenden Teilnehmer vollständig herstellen, bevor er mit der Signalisierung in Richtung des angerufenen Teilnehmers beginnt. In diesem Fall kann der Server 1 beispielsweise Wartetöne über den bereits aufgebauten Audiokanal einspielen.

Fig. 16 zeigt beispielhaft ein weiteres Sequenzdiagramm einer Schaltfunktion bei dem erfindungsgemäßen System. Neben Ruffunktionen führt das Hauskommunikations- bzw. Hausautomationssystem 2 auch Schaltfunktionen durch. Um diese Schaltfunktionen auszulösen, sendet ein Teilnehmer bzw. Gerät beispielsweise eine SSMP-Nachricht mit dem jeweiligen Tastenereignis. Der Server 1 kann diese Information im Anschluss in einen Steuerbefehl umsetzen, den er dann je nach Typ des Aktors über einen geeigneten Weg, beispielsweise SSMP oder KNX übermittelt. Im einfachsten Fall liefert der Aktor keine Meldung oder lediglich die Meldung "Befehl empfangen". Ist der Aktor jedoch, beispielsweise durch einen zusätzlichen Sensor, in der Lage, den Verlauf eines Schaltvorgangs zu überwachen, wird er das Ereignis an den Server 1 zurückmelden, wie in Fig. 17 dargestellt.

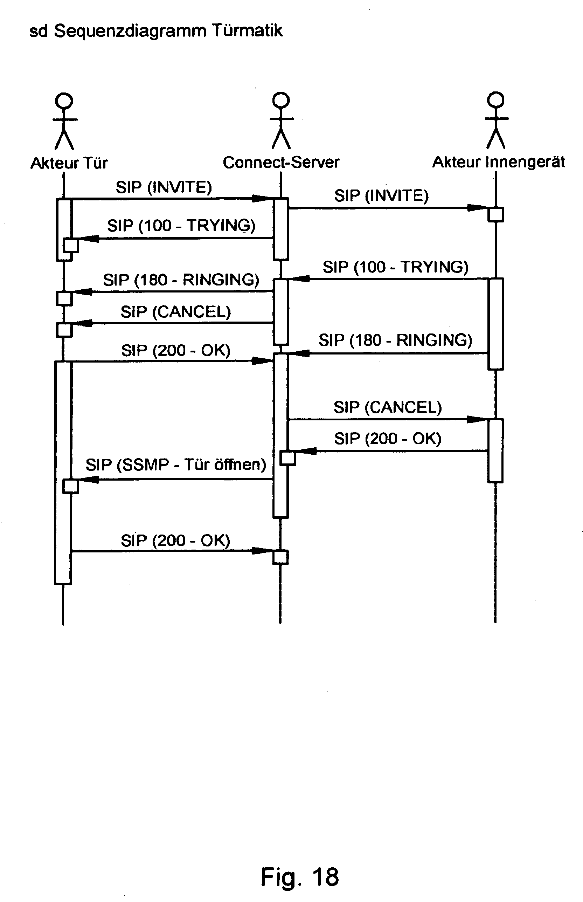

Fig. 18 zeigt ein weiteres beispielhaftes Sequenzdiagramm für eine Türmatik-Funktion. Bei aktivierter Türmatik öffnet der Server 1 eine Tür automatisch nach einer definierten Zeitspanne. Dabei kann zwischen Türmatik mit oder ohne Signalisierung unterschieden werden. Bei der Variante ohne Signalisierung erhält ein Gerät keinerlei Mitteilung über den Vorgang mit Ausnahme einer visuellen Anzeige an einem Display des Gerätes. Bei einer Türmatik mit Signalisierung wird der Ruf durchgestellt und es klingelt im Gerät normal. Nimmt das Gerät einen Ruf während der definierten Zeitspanne an, wird die Türmatik für den aktuellen Ruf ausgesetzt und der Teilnehmer kann - wie bei einem normalen Türruf - die Tür öffnen. Wird der Ruf jedoch nicht angenommen, öffnet der Server 1 die Tür. Wie bei jedem Türöffner-Vorgang lässt sich auch bei der Türmatik definieren, wie lange der Türöffner aktiv bleiben soll. Die Türmatik wird vorzugsweise durch ein berechtigtes Innengerät aktiviert bzw. deaktiviert.

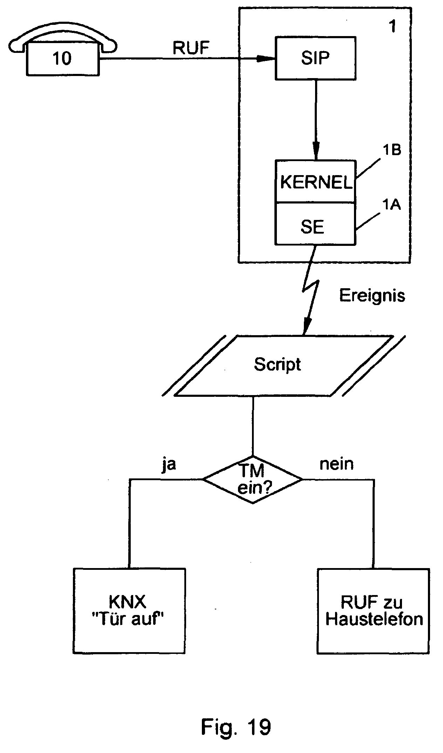

Fig. 19 zeigt deutlich nochmals das Anwendungsbeispiel der Türmatik-Funktion, wie es durch das erfindungsgemäße Hauskommunikations- oder Hausautomationssystem 2 bereitgestellt werden kann. Von einem Endgerät, beispielsweise einem Telefon, wird ein Telefonruf über ein Netzwerk an eine Schnittstelle des Servers 1 gesendet. Mittels eines SIP-Protokolltreibers wird die empfangene SIP-Nachricht in ein internes Datenformat umwandelt. Die Skripting-Engine 1A lädt ein vorhandenes Anwendungsprogrammskript gemäß der Konfigurationsdaten, welches die in dem internen Datenformat vorliegenden empfangenen Daten bearbeitet. Wird im Zuge der Ausführung des Anwendungsprogrammskripts festgestellt, dass die Türmatik TM eingeschaltet bzw. aktiviert ist, sendet der Server 1 in dem in Fig. 19 dargestellten Beispiel eine KNX-Nachricht "Tür auf" für die entsprechende Tür. Wird umgekehrt festgestellt, dass die Türmatik TM nicht eingeschaltet bzw. deaktiviert ist, wird der ankommende Ruf an ein Telefon weitergeleitet, um eine normale Telefonverbindung aufzubauen.

In dem erfindungsgemäßen Hauskommunikations- oder Hausautomationssystem 2 kann eine Vielzahl unterschiedlicher Anwendungsprogrammskripte für verschiedenste Funktionen gespeichert bzw. vorgesehen sein.

Im Weiteren werden Beispiele für mögliche Anwendungsskripte kurz beschrieben.

Bei einem Anwendungsskript "Türöffner" wird eine Tür geöffnet. Dabei kann es sich wahlweise um eine festgelegte Tür oder eine mit dem letzten Ruf zu dem jeweiligen Teilnehmer festgelegte Tür handeln. Dabei kann zusätzlich ein Time Out, beginnend mit dem Ende des Türrufes, bei welchem der Türöffner in diesem Modus nicht mehr erlaubt ist, festgelegt sein.

Ein weiteres Anwendungsskript kann für die Funktion "dauerhaft Tür öffnen" vorgesehen sein, wobei der Türöffner dauerhaft auf "Auf" geschaltet ist. Umgekehrt kann die Tür in einem anderen Anwendungsskript auf "dauerhaft geschlossen" geschaltet werden.

In einem Anwendungsskript kann eine Türmatik von einer Innenstation bzw. einem Innengerät aktiviert bzw. deaktiviert werden. In einem weiteren Anwendungsskript kann eine Tür nach einer vordefinierten Zeitspanne nach Klingeln geöffnet werden.

In einem weiteren Anwendungsskript "Schleuse" wird bei einem Öffnen oder erneuten Schließen eines ersten Türöffners automatisch ein zweiter Türöffner angesteuert.

In einem Anwendungsprogrammskript "Etagenruf" sendet ein Etagenklingeltaster, welcher an einem Endgerät angeschlossen ist, eine Signalisierung aus, welche für ein Klingeln an dem Endgerät sowie weiterer zugeordneter Innengeräte dargestellt wird. Eine Kommunikationsverbindung wird hier nicht aufgebaut, der Benutzer kann die Tür manuell oder, falls vorhanden, über einen Türöffner öffnen.

In dem Anwendungsprogrammskript "Umleitung Ein/Aus" kann eine Rufumleitung von einer Innenstation bzw. einem Innengerät aktiviert bzw. deaktiviert werden.

In dem Anwendungsprogrammskript "Rufumleitung Concierge Ein/Aus" können Türrufe von einer vordefinierten Gruppe zu einem Concierge bzw. Anzeigegerät umgeleitet werden.

In einem Anwendungsprogrammskript "Rufweiterleitung" wird ein aktives Gespräch weitergeleitet.

Bei den verschiedenen Rufen kann es sich um einen internen Direktruf, d.h. um einen Ruf zu einem einzelnen internen Zielgerät, um einen externen Direktruf, d. h. um einen Ruf zu einem einzelnen externen Zielgerät, um einen Gruppenruf, d.h. um einen Ruf zu einer Gruppe von Zielgeräten, eine Durchsage, um einen Türruf oder gegebenenfalls um einen Notruf handeln.

Weitere Anwendungsprogrammskripte sind beispielsweise "Türruf - Bild speichern", wobei während eines aktiven Türrufes ein Einzelbild einer Türkamera abgespeichert wird.

Ein weiteres Anwendungsprogrammskript "Verbindungsunterbrechung" betrifft eine aktive Verbindung, ähnlich wie bei einem Auflegen eines Telefons.

Ein Anwendungsprogrammskript "Rufübernahme, Pick up" holt einen Ruf, der auf einen anderen Teilnehmer eingeht, sofern der jeweilige Teilnehmer dazu berechtigt ist.

In dem Anwendungsprogrammskript "Abwesenheitsschaltung" werden Rufe bei aktiver Abwesenheitsschaltung bzw. bei "Tag/Nacht-Umschaltung" automatisch zu einem alternativen Teilnehmer bzw. alternativen Gerät oder eine alternative Gruppe von Geräten umgeleitet.

Bei dem Anwendungsprogrammskript "Rückrufforderung" hat der rufende Teilnehmer bei Nichterreichbarkeit eines Rufzieles die Möglichkeit, eine Rückrufforderung zu setzen. Dies kann eine optische Signalisierung beim gerufenen Teilnehmer bzw. Gerät auslösen.

Ein weiteres Anwendungsprogrammskript "Halten/Makeln" dient dazu, dass eine aktive Kommunikation gehalten und über einen zweiten Kanal geschaltet wird.

In einem weiteren Anwendungsprogrammskript "Steuerbefehl Teilnehmer" kann auf Tastendruck bzw. Signal am Eingang eines Teilnehmers bzw. Gerätes eine beliebige Schaltaktion ausgeführt werden.

Gemäß dem Anwendungsprogrammskript "Schalten" wird eine beliebige Schaltfunktion ausgelöst.

In dem Anwendungsprogrammskript "Kamera aufschalten" werden gezielt eine oder mehrere Kameras in dem System aufgerufen und das Videobild wiedergegeben.

Bei dem Anwendungsprogrammskript "Audio/Videoverbindungen aufzeichnen" kann ein Teilnehmer bzw. Gerät während einer aktiven Kommunikationsverbindung mittels eines Tastenkommandos den Server 1 dazu veranlassen, die aktuelle Verbindung aufzuzeichnen.

Gemäß dem Anwendungsprogrammskript "Aufzeichnungen wiedergeben" können Teilnehmer Aufzeichnungen, die sie selbst veranlasst haben, zu einem späteren Zeitpunkt über dieses Anwendungsprogrammskript wieder aufrufen.

Diese Aufzeichnungen können von einem Teilnehmer, der sie veranlasst hat bzw. die entsprechende Berechtigung dazu besitzt, von dem Teilnehmer bzw. Gerät heruntergeladen werden.

Bei der Ausführung des Anwendungsprogrammskripts "DND" ist ein Teilnehmer bzw. Gerät nicht mehr rufbar. Der entsprechende Status wird in einer Teamliste aktualisiert.

Bei der Ausführung des Anwendungsprogrammskripts "Mailbox Ein/Aus" wird eine Benutzermailbox aktiviert bzw. deaktiviert.

Bei der Ausführung des Anwendungsprogrammskripts "Mailbox Ruf" kann bei Umleitung zur Mailbox eine Nachricht hinterlassen werden.

Bei der Ausführung des Anwendungsprogrammskripts "Mailbox Abruf" können bei Ruf zu einer eigenen Mailbox gespeicherte Nachrichten abgerufen und die Mailbox konfiguriert werden.

Bei Ausführung des Anwendungsprogrammskripts "Voicememo aufzeichnen" wird eine Sprachnachricht aufgezeichnet.

Bei der Ausführung des Anwendungsprogrammskripts "Voicememo wiedergeben" können aufgezeichnete Memos bzw. Sprachnachrichten an denselben Teilnehmer wiedergegeben werden.

Bei Ausführung des Anwendungsprogrammskripts "Textmeldungen" können definierte Texte direkt an einen Teilnehmer, eine Gruppe von Teilnehmern oder an alle Teilnehmer bzw. Geräte gesendet werden.

Bei Ausführung des Anwendungsprogrammskripts "SMS/MMS" werden Mitteilungen über ein Telefonnetz versendet.
Bei Ausführung des Anwendungsprogrammskripts "Alarm" können beispielsweise Notausgänge dauerhaft aufgemacht werden bzw. Schutztüren geschlossen werden.

Bei Ausführung des Anwendungsprogrammskripts "Telefonbuch abrufen" wird ein Telefonbuch auf der Endgeräteseite abgerufen.

Die oben aufgeführten Anwendungsskripte sind Anwendungsbeispiele. Es ist möglich, weitere spezifische Anwendungsskripte in Abhängigkeit von dem jeweiligen Anwendungsfall zu programmieren bzw. zu schreiben und in einem Schutzprogrammspeicher 8 des Servers 1 abzulegen.

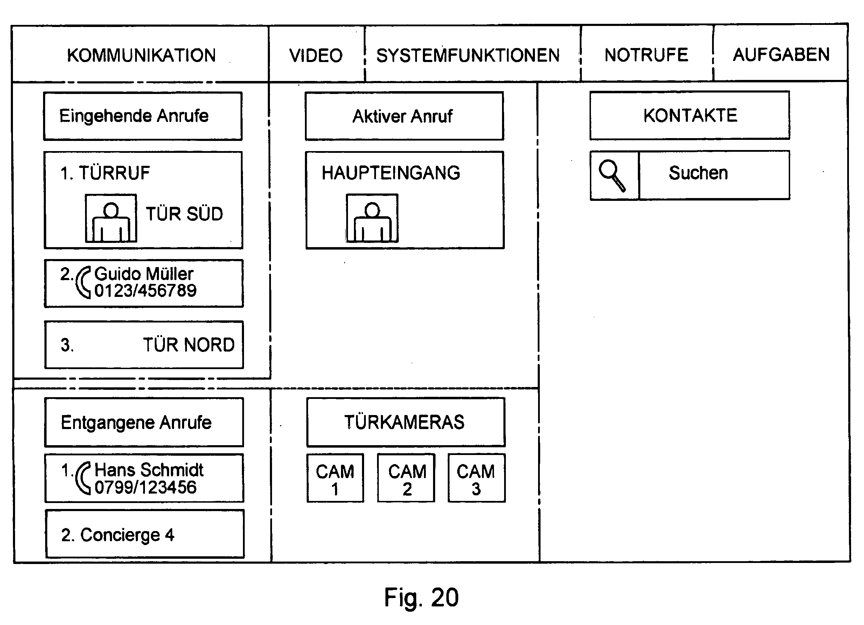

Bei einer Ausführungsform ist der Server 1 über eine Schnittstelle mit einem Anzeigegerät bzw. einem PC-Client oder einem PC-Concierge verbunden. Fig. 20 zeigt beispielsweise das Design einer Bedienoberfläche, wie es auf einem Display eines PC-Concierge dargestellt werden kann. Bei einem PC-Client bzw. PC-Concierge kann es sich um ein Universalendgerät handeln, wobei das Gerät vorzugsweise eine Kopie des Server-Kernels 1B beinhaltet. Mit dem Anzeigegerät kann ähnlich wie mit anderen Innengeräten im Access-System kommuniziert werden, d.h. Rufen, Hören, Sprechen, Sehen inklusive Schaltfunktionen, d.h. insbesondere Schalten, Steuern, Regeln und Anzeigen. Die Funktionen eines Anzeigeendgerätes umfassen u.a. eine skalierbare Darstellung, ein Pop up bei einem eingehenden Ruf, Unterstützung und Differenzierung unterschiedlicher Rufarten, unterschiedliche polyphone Klingeltöne, eine einstellbare Lautstärke für Ruf, Gespräch, Durchsage, Mikrophon, eine einstellbare Helligkeit, Farbe sowie Kontrast. Weitere Funktionen sind eine Geräte- und Teilnahmeübersicht sowie Adressbücher. Im Weiteren kann ein privates Adressbuch vorgesehen sein. Weiterhin liefert das Anzeigegerät eine Liste von verpassten Rufen, eine Liste von erreichten Rufen, eine Liste von gerufenen Teilnehmern, eine Rückrufliste. Weitere Funktionen sind Rufannahme, Halten, Vermitteln, Rufweiterleitung, Rufabschaltung, Stummschaltung, Rufumleitung, Rufnachholung, Rufübernahme. Weitere Funktionen sind Bild- und Videoanzeige des anrufenden Teilnehmers sowie vorzeitige Videodarstellungen bei Türrufern. Weitere Funktionen können bei einer Tonund Bildaufzeichnung bestehen. Weitere Funktionen umfassen eine Anrufbeantworterfunktion, einen Internruf, einen gezielten Türruf, wobei Teilnehmer, Türen und Geräte wählbar aus einer Liste oder mittels eines Ziffernblockes wählbar sind.

Weitere Funktionen umfassen einen Gruppenruf, einen Kettenruf sowie eine Gruppendurchsage. Die Gruppendurchsage kann mit Priorisierung oder mit Rückantwort erfolgen. Weitere Funktionen sind eine Rückruffunktion sowie eine Präsenzanzeige der Teilnehmer, beispielsweise in den diversen Listen und Adressbüchern. Weitere Funktionen sind Statusanzeigen, wie Klartextanzeigen von Meldungen, insbesondere von Hinweisen, Warnungen oder Alarmmeldungen. Weitere Funktionen sind Schaltfunktionen für externe Relais für eine Türmatik-Funktion. Hierbei kann eine Türmatik für eine Tür XY aktiviert bzw. deaktiviert werden. Beispiele für Funktionen sind: Einschalten eines Lichts bei einem aktiven Türruf bzw. Türgespräch, Einschalten eines Türöffners bei aktivem Türruf oder eine Kameraselektion. Weitere Funktionen umfassen eine Kamera-Scan-Funktion sowie eine Steuerung einer Türkamera bei einem aktivierten Türruf. Die Türkamera kann dabei beispielsweise geschwenkt, geneigt oder gezoomt werden.

Die Erfindung schafft ein IP-basiertes Kommunikations- oder Hausautomationssystem 2, das um Systemfunktionalitäten in einfacher Weise erweiterbar ist. Das auf IP-Basis angelegte, ganzheitliche Hauskommunikations- bzw. Hausautomationssystem 2 ist in der Lage, verschiedene Bereiche der Kommunikation, Sicherheit, Heimautomation bzw. Gebäudeautomation miteinander zu integrieren. Das erfindungsgemäße System 2 ist voll skalierbar und kann eine Vielzahl von Teilnehmern bzw. Endgeräten umfassen. Es weist zudem eine hohe System- und Ausfallsicherheit auf. Es erlaubt eine zentrale Steuerung und Koordination durch den Server 1. Ferner erlaubt das erfindungsgemäße System, Alarm- und Notrufmanagement ohne Weiteres zu integrieren. Es bietet zudem typische auf Telefonanlagen basierende Funktionen sowie Steuer- und Automationsfunktionen. Das erfindungsgemäße System 2 ermöglicht mehrere simultane Sprech- und Videoverbindungen. Dabei kann die Einbindung von Fremdprodukten bzw. Fremdgeräten ohne Weiteres erfolgen. Das erfindungsgemäße System bietet zudem einen hohen Komfort für Konfigurations- und Updatefunktionen. Gewünschte Sonderlösungen sind in einfacher Weise implementierbar. Die Energieversorgung der Teilnehmer bzw. Geräte kann beispielsweise durch POE (Power Over Ethernet) erfolgen. Die in dem erfindungsgemäßen Kommunikations- oder Hausautomationssystem 2 eingesetzten Geräte bzw. Netzwerkkomponenten umfassen sowohl passive als auch aktive Netzwerkkomponenten. Die aktiven Netzwerkkomponenten umfassen beispielsweise Audio-HT-Geräte und Video-HT-Geräte. Des Weiteren umfassen die aktiven Netzwerkkomponenten bzw. Geräte ansteuerbare Türen. Weitere Beispiele für verwendete aktive Netzwerkkomponenten sind Switches oder Router, die es erlauben, das erfindungsgemäße Hauskommunikations- oder Hausautomationssystem 2 in eine bestehende IP-Netzinfrastruktur zu integrieren. Dabei wird vorzugsweise das erfindungsgemäße Hauskommunikations- oder Hausautomationssystem 2 von einem bestehenden Netz durch VLAN getrennt. Die Switches können beispielsweise mit 10/100 MBit Ethernetports ausgestattet sein. Switches für kleinere Netzwerke weisen beispielsweise 8 - 12 Ports auf, wobei Switches für größere Netzwerke auch 24 - 48. Ports besitzen können. Bei der Stromversorgung der jeweils angeschlossenen Endgeräte können die Switches mit POE (Power Over Ethernet) ausgerüstet sein. Weitere Beispiele für verwendete aktive Komponenten bzw. Geräte sind sogenannte Media-Adapter. Ein Adapter kann beispielsweise für die Übertragung über Glasfaser und für die Übertragung über ein Stromversorgungsnetz (Power Line) vorgesehen sein.

Als weitere aktive Netzwerkkomponenten bzw. Geräte sind Gateways bzw. Router vorgesehen. Gateways werden vorgesehen, wenn Netze zusammengeschaltet werden sollen, eine direkte Verbindung jedoch nicht möglich ist. Dies kann beispielsweise aus Sicherheitsgründen in unterschiedlichen Protokollen oder bei inkompatiblen physikalischen Schnittstellen notwendig sein. Teilnehmer bzw. Geräte können direkt oder mit einem Gateway über das Internet mit dem System verbunden werden. Die in dem erfindungsgemäßen Hauskommunikations- und Hausautomationssystem 2 verwendeten unterschiedlichen Geräte sind vorzugsweise über eine Adresse ansprechbar. Diese Geräte umfassen beispielsweise Videokameras, Bewegungsmelder, elektronische Schlüsselleser, Fingerabdruckerkennungseinrichtungen, Rufanzeigen, Lichtmodule, Schlüsselschalter, Hausnummeranzeigen, Tastenfelder, Kartenleser und Türlautsprecher. Weiterhin kann es sich bei den Endgeräten um Telefongeräte handeln, die fest installiert sind oder auch tragbar sind. Weitere Beispiele sind Videogeräte für Türen, Garagen oder Jalousien bzw. Rollläden.

## Patentansprüche

1. Vorrichtung (1) zur skriptgesteuerten Datenverarbeitung von Daten für ein Hauskommunikations- oder Hausautomationssystem (2) mit:
mindestens einer Schnittstelle zum Empfang von Datenpaketen, welche von einem ersten Gerät (4; 6) über ein Datennetzwerk (3) gemäß einem ersten Datenübertragungsprotokoll übertragen werden, wobei für jede Schnittstelle einen zugehöriger Protokolltreiber vorgesehen ist, welcher die in den empfangenen Datenpaketen enthaltenen Daten in ein internes Datenformat umwandelt; und mit einer Skripting-Engine (1A), die ein gespeichertes Anwendungsprogrammskript lädt, welches die in dem internen Datenformat vorliegenden empfangenen Daten gemäß den in dem geladenen Anwendungsprogrammskript enthaltenen Anwendungsprogrammanweisungen anhand von Statuspunkten, SP, die jeweils einen Zustand einer Gerätefunktion eines Gerätes angeben, verarbeitet, wobei die verarbeiteten Daten durch einen Protokolltreiber in Datenpakete verpackt und gemäß einem zweiten Datenübertragungsprotokoll über eine Schnittstelle zu einem zweiten Gerät (4; 6) übertragen werden,
**dadurch gekennzeichnet, dass**
eine Wertänderung eines Statuspunktes, SP, ein Auslöseereignis bildet, wobei eine durch ein Anwendungsprogrammskript hervorgerufene Wertänderung eines Statuspunktes, SP, infolge eines Auslöseereignisses an andere Anwendungsprogrammskripte, die eine Meldung entsprechend den Konfigurationsdaten abonniert haben, in einer Nachricht gemeldet wird.

2. Vorrichtung nach Anspruch 1,
wobei die Schnittstellen der Vorrichtung (1) mindestens eine oder mehrere der folgenden Schnittstellen aufweisen:
eine Feldbus-Schnittstelle,
eine SIP-(Session Initiation Protocol)Schnittstelle,
eine Webservice-Schnittstelle,
eine Telefonanlagen-Schnittstelle, und
eine SNMP-Schnittstelle.

3. Vorrichtung nach Anspruch 1 oder 2,
wobei das erste oder zweite Gerät (4,6) jeweils ein über das Datennetzwerk (3) mit der Vorrichtung (1) direkt verbundenes Endgerät (4) oder ein Gateway zu einem anderen Datennetzwerk ist.

4. Vorrichtung nach einem der vorangehenden Ansprüche 1 bis 3,
wobei das Anwendungsprogrammskript durch die Skripting-Engine (1A) aus dem Skript-Programmspeicher (8) geladen und die in dem geladenen Anwendungsprogrammskript enthaltenen Anwendungsprogrammanweisungen durch einen Interpreter interpretiert werden.

5. Vorrichtung nach Anspruch 4,
wobei der Interpreter
einen Quellcode des Anwendungsprogrammskripts direkt ausführt oder
einen Quellcode des Anwendungsprogrammskripts in einen Zwischencode übersetzt und diesen Zwischencode ausführt oder
einen vorkompilierten Code des Anwendungsprogrammskripts ausführt.

6. Vorrichtung nach einem der vorangehenden Ansprüche 1 bis 5,
wobei die Vorrichtung (1) durch einen zentralen oder durch mehrere dezentrale Server eines Serververbundes gebildet wird.

7. Vorrichtung nach Anspruch 6,
wobei der Server (1) einen Server-Kernel (1B) aufweist, welcher als primäre Basisdienste,
einen Nachrichtenaustauschdienst zum internen Austausch von Nachrichten,
einen Datenbankdienst zum Bereitstellen von Konfigurationsdaten und
einen Datastore-Dienst zum Bereitstellen von Laufzeitdaten aller Dienste des
Servers (1) aufweist.

8. Vorrichtung nach Anspruch 7,
wobei der Server (1) als sekundäre Dienste Netzwerkdienste bereitstellt, welche
einen DHCP-(Dynamic Host Configuration Protocol)Dienst zur Vergabe von
IP-Adressen für die Geräte (4; 6),
einen DNS-(Domain Name System)Dienst zur Adressauflösung,
einen NTP-Dienst zur Zeitsynchronisation und
einen TFTP-(Trivial File Transfer Protocol) Dienst zum Datentransfer zwischen Teilnehmern und dem Server (1) aufweist.

9. Vorrichtung nach einem der vorangehenden Ansprüche 2 bis 8,
wobei die Feldbus-Schnittstelle eine KNX-Feldbus-Schnittstelle ist.

10. Vorrichtung nach Anspruch 7,
wobei der Datastore-Dienst des Servers (1) als Laufzeitdaten Statuspunkte, SP, bereitstellt, die jeweils einen Zustand einer Gerätefunktion eines Gerätes (4; 6) angeben.

11. Vorrichtung nach Anspruch 10,
wobei jedem Statuspunkt, SP, ein konfigurierbarer Datentyp fest zugeordnet ist, welcher durch den Datenbankdienst des Server-Kernels (1B) bereitgestellt wird.

12. Vorrichtung nach Anspruch 10 oder 11,
wobei eine Wertänderung eines Statuspunktes, SP, ein Auslöseereignis bildet, durch welches die Skripting-Engine (1A) dazu aktiviert wird, anhand der durch den Datenbankdienst des Server-Kernels (1B) bereitgestellten Konfigurationsdaten ein zu dem jeweiligen Statuspunkt, SP, zugehöriges Anwendungsprogrammskript aus dem Skript-Programmspeicher (8) zu laden.

13. Vorrichtung nach Anspruch 12,
wobei durch das geladene Anwendungsprogrammskript in Abhängigkeit von dem durch die Wertänderung eines Statuspunktes, SP, hervorgerufenen Auslöseereignis der Wert mindestens eines anderen Statuspunktes, SP, einer Gerätefunktion eines Gerätes (4; 6) als Folgeereignis geändert wird.

14. Vorrichtung nach Anspruch 13,
wobei bei Auftreten eines Folgeereignisses durch das geladene Anwendungsprogrammskript mindestens eine zugehörige Gerätefunktion eines Gerätes (4; 6) angesteuert wird, indem verarbeitete Daten als Steuerdaten in einem Datenpaket verpackt zu dem jeweiligen Gerät (4; 6) übertragen werden.

15. Vorrichtung nach einem der vorangehenden Ansprüche 11 bis 14,
wobei eine durch ein Anwendungsprogrammskript hervorgerufene Wertänderung eines Statuspunktes, SP, infolge eines Auslöseereignisses oder infolge eines Folgeereignisses anhand der durch den Datenbank-Dienst bereitgestellten Konfigurationsdaten an andere Anwendungsprogrammskripte in einer Nachricht gemeldet wird, die eine derartige Meldung entsprechend den Konfigurationsdaten abonniert haben.

16. Vorrichtung nach einem der vorangehenden Ansprüche 10 bis 15,
wobei die Gerätefunktionen Sensorfunktionen und Aktorfunktionen eines Gerätes (4; 6) aufweisen.

17. Vorrichtung nach einem der vorangehenden Ansprüche 12 bis 16,
wobei ein mit der Vorrichtung über eine Schnittstelle verbundenes Anzeigegerät einem Nutzer die Wertänderung eines Statuspunktes, SP, anzeigt.

18. Verfahren zum skriptgesteuerten Verarbeiten von Daten für ein Hauskommunikations- oder Hausautomationssystem durch einen Server (1) mit den Schritten:
(a) Umwandeln (S1) von Daten, die der Server (1) in einem Datenpaket gemäß einem ersten Datenübertragungsprotokoll von einem ersten Gerät empfängt, durch einen zugehörigen Protokolltreiber des Servers (1) in ein internes Datenformat;
(b) Verarbeiten (S2) der in dem internen Datenformat des Servers (1) vorliegenden Daten gemäß Anweisungen eines geladenen Anwendungsprogrammskripts des Servers (1) anhand von Statuspunkten, SP, die jeweils einen Zustand einer Gerätefunktion eines Gerätes angeben; und
(c) Verpacken (S3) der verarbeiteten Daten durch einen Protokolltreiber des Servers (1) in Datenpakete, die gemäß einem zweiten Datenübertragungsprotokoll von dem Server (1) zu einem zweiten Gerät übertragen werden;
**dadurch gekennzeichnet, dass**
eine Wertänderung eines Statuspunktes, SP, ein Auslöseereignis bildet, wobei eine durch ein Anwendungsprogrammskript hervorgerufene Wertänderung eines Statuspunktes, SP, infolge eines Auslöseereignisses an andere Anwendungsprogrammskripte, die eine Meldung entsprechend den Konfigurationsdaten abonniert haben, in einer Nachricht gemeldet wird.

## Claims

1. Device (1) for script-controlled data processing of data for a home communication or home automation system (2) having:
at least one interface for receiving data packets which are transmitted from a first unit (4; 6) via a data network (3) according to a first data transmission protocol, wherein
for each interface an associated protocol driver is provided which converts the data contained in the received data packets into an internal data format; and having a scripting engine (1A) which loads a stored application program script which processes the received data present in the internal data format according to the application program instructions contained in the loaded application program script with the aid of status points, SP, which each indicate a status of a unit function of a unit, wherein the processed data are packaged into data packets by a protocol driver and, according to a second data transmission protocol, are transmitted via an interface to a second unit (4; 6),
**characterised in that**
a value change of a status point, SP, forms a trigger event, wherein, as a result of a trigger event, a value change of a status point, SP, brought about by an application program script, is alerted in a message to other application program scripts which have subscribed to an alert corresponding to the configuration data.

2. Device as claimed in claim 1,
wherein the interfaces of the device (1) comprise at least one or several of the following interfaces:
a field bus interface,
an SIP (session initiation protocol) interface,
a web service interface,
a telephone system interface, and
an SNMP interface.

3. Device as claimed in claim 1 or 2,
wherein the first or second unit (4, 6) is in each case a terminal unit (4) directly connected via the data network (3) to the device (1) or is a gateway to another data network.

4. Device as claimed in any one of the preceding claims 1 to 3,
wherein the application program script is loaded by the scripting engine (1A) from the script program memory (8) and the application program instructions contained in the loaded application program script are interpreted by an interpreter.

5. Device as claimed in claim 4,
wherein the interpreter
directly executes a source code of the application program script or
translates a source code of the application program script into an intermediate code and executes this intermediate code or
executes a precompiled code of the application program script.

6. Device as claimed in any one of the preceding claims 1 to 5,
wherein the device (1) is formed by one central or by a plurality of decentralised servers of a server network.

7. Device as claimed in claim 6,
wherein the server (1) comprises a server kernel (1B), which comprises, as primary basic services,
a message exchange service for internal exchange of messages,
a database service for provision of configuration data and a data store service for provision of run time data of all services of the server (1).

8. Device as claimed in claim 7,
wherein the server (1) provides, as secondary services, network services which comprise
a DHCP (dynamic host configuration protocol) service for assignment of
IP addresses for the units (4; 6),
a DNS (domain name system) service for address resolution, an NTP service for time synchronisation and
a TFTP (trivial file transfer protocol) service for data transfer between participants and the server (1).

9. Device as claimed in any one of the preceding claims 2 to 8,
wherein the field bus interface is a KNX field bus interface.

10. Device as claimed in claim 7,
wherein the data store service of the server (1) provides, as run time data, status points, SP, which each indicate a status of a unit function of a unit (4; 6).

11. Device as claimed in claim 10,
wherein each status point, SP, is fixedly allocated a configurable data type which is provided by the database service of the server kernel (1B).

12. Device as claimed in claim 10 or 11,
wherein a value change of a status point, SP, forms a trigger event by which the scripting engine (a) is activated to load an application program script associated with the respective status point, SP, from the script program memory (8) with the aid of the configuration data provided by the database service of the server kernel (1B).

13. Device as claimed in claim 12,
wherein, by means of the loaded application program script in dependence upon the trigger event brought about by the value change of a status point, SP, the value of at least one other status point, SP, of a unit function of a unit (4; 6) is changed as a subsequent event.

14. Device as claimed in claim 13,
wherein, upon occurrence of a subsequent event, at least one associated unit function of a unit (4; 6) is actuated by means of the loaded application program script, in that processed data packaged as control data in a data packet are transmitted to the respective unit (4; 6).

15. Device as claimed in any one of the preceding claims 11 to 14,
wherein, as a result of a trigger event or as a result of a subsequent event, a value change of a status point, SP, brought about by an application program script is alerted in a message to other application program scripts with the aid of the configuration data provided by the database service, which application program scripts have subscribed to such an alert corresponding to the configuration data.

16. Device as claimed in any one of the preceding claims 10 to 15,
wherein the unit functions comprise sensor functions and actuator functions of a unit (4; 6).

17. Device as claimed in any one of the preceding claims 12 to 16,
wherein a display unit connected to the device via an interface displays the value change of a status point, SP, to a user.

18. Method for script-controlled processing of data for a home communication or home automation system by means of a server (1) comprising the steps of:
a) converting (S1) data, which the server (1) receives from a first unit in a data packet according to a first data transmission protocol, into an internal data format by an associated protocol driver of the server (1);
b) processing (S2) the data present in the internal data format of the server (1) according to instructions of a loaded application program script of the server (1) with the aid of status points (SP) which each indicate a status of a unit function of a unit; and
c) packaging (S3) the processed data by a protocol driver of the server (1) into data packets which are transmitted from the server (1) to a second unit according to a second data transmission protocol;
**characterised in that**
a value change of a status point, SP, forms a trigger event, wherein, as a result of a trigger event, a value change of a status point, SP, brought about by an application program script, is alerted in a message to other application program scripts which have subscribed to an alert corresponding to the configuration data.

## Revendications

1. Dispositif (1) pour le traitement commandé par script de données pour un système de communication domestique ou un système domotique (2) comportant :
au moins une interface pour la réception de paquets de données, qui sont transmis par un premier appareil (4 ; 6) par l'intermédiaire d'un réseau de données (3) selon un premier protocole de transmission de données, un pilote de protocole associé, qui convertit les données contenues dans les paquets de données reçus en un format de données interne, étant prévu pour chaque interface ; et comportant un moteur de script (1A), qui charge un script de programme d'application, qui traite les données présentes reçues au format de données interne selon les instructions du programme d'application, qui indiquent respectivement un état d'une fonction d'un appareil (4), comprises dans le script de programme d'application chargé sur la base de points d'état, SP, les données traitées étant mises en paquets de données par un pilote de protocole et transmises à un deuxième appareil (4 ; 6) par l'intermédiaire d'une interface selon un deuxième protocole de transmission de données,
**caractérisé en ce que**
une modification de valeur d'un point d'état, SP, forme un événement déclencheur, une modification de valeur provoquée par un script de programme d'application d'un point d'état, SP, étant annoncée dans un message à la suite d'un événement déclencheur à d'autres scripts de programme d'application, qui se sont abonnés à un message correspondant aux données de configuration.

2. Dispositif selon la revendication 1,
dans lequel les interfaces du dispositif (1) présentent au moins une ou plusieurs des interfaces suivantes :
une interface de bus de terrain,
une interface SIP (Session Initiation Protocol),
une interface de service web,
une interface d'installation téléphonique, et
une interface SNMP.

3. Dispositif selon la revendication 1 ou 2,
dans lequel le premier ou le second appareil (4,6) est respectivement un appareil terminal relié directement au dispositif (1) par l'intermédiaire du réseau de données (3) ou une passerelle vers un autre réseau de données.

4. Dispositif selon l'une des revendications précédentes 1 à 3,
dans lequel le script de programme d'application est chargé par le moteur de script (1A) à partir de la mémoire de programme de script (8) et les instructions du programme d'application contenues dans le script de programme d'application chargé sont interprétés par un interprète.

5. Dispositif selon la revendication 4,
dans lequel l'interprète
exécute directement un code source du script de programme d'application ou
traduit un code source du script de programme d'application en un code intermédiaire et exécute un code intermédiaire ou
exécute un code précompilé du script de programme d'application.

6. Dispositif selon l'une des revendications précédentes 1 à 5,
dans lequel le dispositif (1) est formé par un serveur central ou par plusieurs serveurs centraux d'un groupe de serveurs.

7. Dispositif selon la revendication 6,
dans lequel le serveur (1) présente un noyau de serveur (1B), qui présente, en tant que services de base primaires, un service d'échanges d'informations destiné à l'échange interne d'informations,
un service de banque de données destiné à fournir des données de configuration et
un service de stockage de données destiné à fournir des données de durée d'exécution de tous les services du serveur (1).

8. Dispositif selon la revendication 7,
dans lequel le serveur (1) fournit des services réseau comme services secondaires, qui présente
un service DHCP (Dynamit Hast Configuration Protocol) pour l'octroi de
adresses IP pour les appareils (4 ; 6),
un service DNS (Domain Name System) pour la résolution d'adresse,
un service NTP pour la synchronisation temporelle et
un service TFTP (Trivial File Transfer Protocol) pour le transfert de données entre des abonnés et le serveur (1).

9. Dispositif selon l'une des revendications précédentes 2 à 8,
dans lequel l'interface de bus de terrain est une interface de bus de terrain KNX.

10. Dispositif selon la revendication 7,
dans lequel le service de stockage de données du serveur (1) fournit comme données de durée d'exécution des points d'état, SP, qui indiquent respectivement un état d'une fonction d'un appareil (4 ; 6).

11. Dispositif selon la revendication 10,
dans lequel un type de données configurable est attribué de manière fixe à chaque point d'état, SP, qui est fourni par le service de banque de données du noyau de serveur (1B).

12. Dispositif selon la revendication 10 ou 11,
dans lequel une modification de valeur d'un point d'état, SP, forme un événement déclencheur par lequel le moteur de script (1A) est activé pour charger sur la base des données de configuration fournies par le service de banque de données du noyau de serveur (1B) un script de programme d'application associé au point d'état, SP, respectif à partir de la mémoire de programme de script (8).

13. Dispositif selon la revendication 12,
dans lequel la valeur d'au moins un autre point d'état, SP, d'une fonction d'un appareil (4 ; 6) est modifiée en tant qu'événement lié par le script de programme d'application chargé en fonction de l'événement déclencheur provoqué par la modification de valeur d'un point d'état, SP.

14. Dispositif selon la revendication 13,
dans lequel au moins une fonction d'un appareil (4 ; 6) associée est pilotée lors de l'apparition d'un événement lié par le script de programme d'application chargé en transmettant des données traitées en tant que données de commande empaquetées dans un paquet de données à l'appareil (4 ; 6) respectif.

15. Dispositif selon l'une des revendications précédentes 11 à 14,
dans lequel une modification de valeur provoquée par un script de programme d'application d'un point d'état, SP, est annoncée à d'autres scripts de programme d'application dans un message à la suite d'un événement déclencheur ou à la suite d'un événement lié sur la base des données de configuration fournies par le service de banque de données qui se sont abonnés à une information de ce type correspondant aux données de configuration.

16. Dispositif selon l'une des revendications précédentes 10 à 15,
dans lequel les fonctions d'un appareil présentent des fonctions de détection et des fonctions d'actionnement d'un appareil (4 ; 6).

17. Dispositif selon l'une des revendications précédentes 12 à 16,
dans lequel un appareil d'affichage raccordé au dispositif par l'intermédiaire d'une interface indique à un utilisateur la modification de valeur d'un point d'état, SP.

18. Procédé pour le traitement commandé par script de données pour un système de communication domestique ou un système domotique par un serveur (1) comprenant les étapes de :
a) conversion (S1) de données que le serveur (1) reçoit depuis une premier appareil dans un paquet de données selon un premier protocole de transmission de données, par un pilote de protocole associé du serveur (1) en un format de données interne ;
b) traitement (S2) des données converties en format de données interne du serveur (1) selon les instructions d'un script de programme d'application chargé du serveur (1) sur la base de points d'état, SP, qui indiquent respectivement un état d'une fonction d'un appareil ; et
c) empaquetage (S3) des données traitées par un pilote de protocole du serveur (1) en paquets de données, qui sont transmis par le serveur (1) à un second appareil selon un second protocole de transmission de données ;
**caractérisé en ce que**
une modification de valeur d'un point d'état, SP, forme un événement déclencheur, une modification de valeur provoquée par un script de programme d'application d'un point d'état, SP, étant annoncée dans un message à la suite d'un événement déclencheur à d'autres scripts de programme d'application, qui se sont abonnés à un message correspondant aux données de configuration.
